# EUROPEAN PATENT SPECIFICATION

(11) **EP 2 796 739 B1**
(45) Date of publication and mention of the grant of the patent: **06.12.2017**
(21) Application number: 12860947.6
(22) Date of filing: 18.12.2012
(51) Int. Cl.: F16C 33/54, B21D 53/12, F16C 19/26, F16C 19/36

(54) **ROLLER BEARING CAGE AND MANUFACTURING METHOD THEREOF**
ROLLENLAGERKÄFIG UND HERSTELLUNGSVERFAHREN DAFÜR
CAGE DE ROULEMENT À ROULEAUX ET PROCÉDÉ DE FABRICATION DE CETTE CAGE

(30) Priority: 21.12.2011 JP 2011279155; 07.03.2012 JP 2012050129; 19.10.2012 JP 2012231299
(43) Date of publication of application: 29.10.2014
(73) Proprietor: Nakanishi Metal Works Co., Ltd., Kita-ku Osaka-shi Osaka 530-8566 (JP)
(72) Inventor: KAMIJI Michiyuki, Osaka-shi Osaka 530-8566 (JP); MAEDA Hiroyuki, Osaka-shi Osaka 530-8566 (JP); OKANO Masaki, Osaka-shi Osaka 530-8566 (JP); TESHIMA Kenji, Osaka-shi Osaka 530-8566 (JP)
(74) Representative: Vossius & Partner Patentanwälte Rechtsanwälte mbB
(86) International application number: PCT/JP2012/082833
(87) International publication number: WO 2013/094615

(56) References cited:
- EP-A1- 1 876 365
- EP-A2- 1 837 539
- CH-A- 254 893
- DE-U- 1 927 472
- GB-A- 625 594
- JP-A- 2002 021 878
- JP-A- 2004 293 698
- JP-A- 2007 040 522
- JP-A- 2007 040 522
- JP-A- 2007 255 606
- JP-A- 2007 303 536
- JP-A- 2008 232 171
- JP-A- 2009 275 742
- JP-A- 2010 043 734
- JP-A- 2010 112 473
- US-A- 1 063 705
- US-A- 2 049 040

## Description

### Technical Field

The present invention relates to a manufacturing method of a cage for holding rollers in a roller bearing constituting a rotation support part in various mechanical devices while preventing the rollers from dropping out, more specifically, to a roller bearing cage suited to a very large roller bearing.

### Background Art

Roller bearings have a larger load capability for radial load than ball bearings. A conical roller bearing into which truncated cone-shaped rollers (conical rollers) are embedded as rolling elements, is capable of supporting a combined load of radial load and axial (thrust) load, and thus is widely used at rotation support parts of drive devices, gear reducers, power transmission devices, and the like in various mechanical systems such as automobiles, rail vehicles, and construction machines, and the like. A spherical roller bearing (automatic self-aligning roller bearing) into which barrel-shaped rollers (spherical rollers) are embedded as rolling elements, has the advantage of being usable for its self-aligning property even if an outer ring and an inner ring are inclined due to an attachment error or shock load, and thus is widely used at rotation support axis parts of various industrial mechanical systems and the like under vibration and shock load. A cylindrical roller bearing into which cylinder-shaped rollers (cylindrical rollers) are embedded as rolling elements, is suited to high-speed rotation, and thus is widely used at rotation support parts of main shafts of working machines and the like such as lathes, millers, and machining centers.

Cages used for such roller bearings are generally press cages that are formed by pressing a steel plate such as a cold-rolled steel plate or a hot-rolled steel plate. Finished products are fabricated from disc-shaped intermediate materials formed by pressing and punching a metal plate through a large number of press steps (refer to Patent Document 1, Figs. 5 and 6, for an example of a conical roller bearing cage, and refer to Patent Document 2, Fig. 16, for an example of a spherical roller bearing cage).

In addition, there is also a conical roller bearing cage that is manufactured by fabricating separately a first member including a small-diameter ring part and a column part and a second member including a large-diameter ring part, and then joining and fixing the first and second members by laser welding (for example, refer to Patent Document 3).

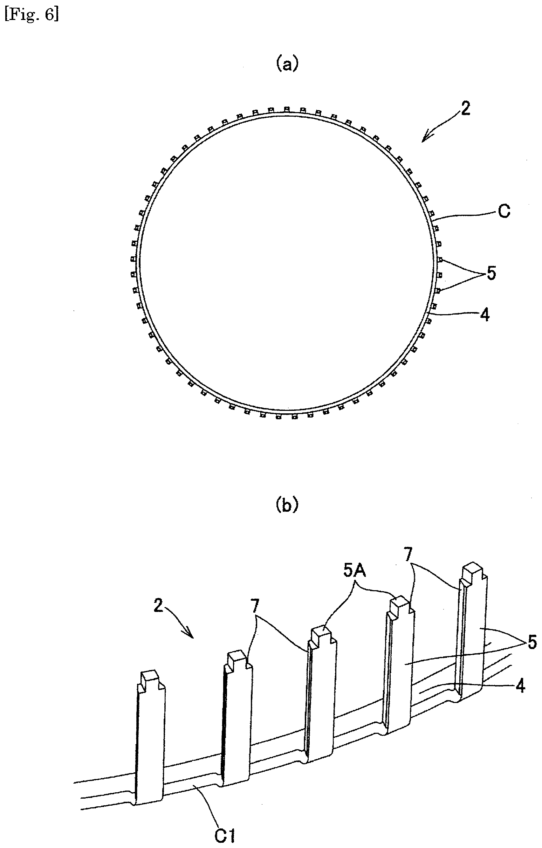

Here, the first member is fabricated through a first punching step at which a circular material is formed from a belt-shaped plate-like material, a second punching step at which an intermediate material is formed by punching out a plurality of fan-shaped parts from the circular material, a surface pressing step at which tapered conical roller abutment surfaces are formed at both edges of an upper surface of a column-formed plate part in the intermediate material, a folding step at which a base end of the column-formed plate part is folded and erected, and a third punching step at which an inner peripheral portion of central plate is cut in a circular shape. The second member is fabricated through an abutment portion processing step at which abutment portions for abutment and joint with leading ends of the column parts of the first member are formed in a band-like elongated member, and a deforming and fixing step at which the elongated member is cut in a predetermined length and deformed in a circular shape, and ends of the cut portions are joined and fixed to each other by joining means such as welding or the like (for example, refer to Patent Document 3, Figs. 6 and 18 to 20).

Further, there is a conical roller bearing cage that is manufactured by fabricating separately a first member including a large-diameter ring part and a column part and a second member including a small-diameter ring part, and joining and fixing the first and second members by laser welding (for example, refer to Patent Document 3).

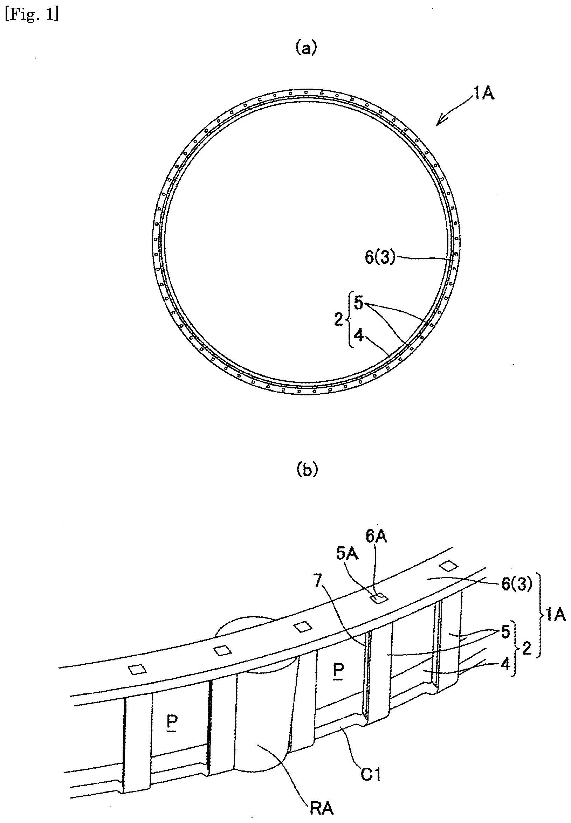

Here, the first member is fabricated through a first punching step at which a belt-like plate-shaped material is punched into a disc-shaped central portion and a plurality of fan-shaped portions continued to the central portion to form an intermediate material, a surface pressing step at which an intermediate material is formed by forming tapered conical roller abutment surfaces at both edges of a lower surface of a column-formed plate portion formed in the intermediate material, a folding step at which a base end of the column-formed plate portion is folded and erected, and a second punching step at which an outer peripheral portion of the intermediate material is cut into a circular shape. The second member is fabricated through an abutment portion processing step at which abutment portions for abutment and joint with leading ends of the column parts of the first member are formed in a band-like elongated member, and a deforming and fixing step at which the elongated member is cut in a predetermined length and deformed in a circular shape, and ends of the cut portions are joined and fixed to each other by joining means such as welding or the like (for example, refer to Patent Document 3, Figs. 1 to 6).

### Citation List

### Patent Literatures

Patent Document 1: JP-A No. H08- 326761
Patent Document 2: JP-A No. 2005-90740
Patent Document 3: JP-A No. 2007-40522

### Summary of Invention

### Technical Problem

With upsizing of mechanical devices, roller bearings used in the mechanical devices have been also increased in size. As for cages for roller bearings, there is demand for supersized cages that are about 1 to 3 m in diameter and have a thickness of steel plate as a material of about 8 to 16 mm (hereinafter, referred to as "supersized cages").

In addition, a large-sized roller bearing used in a large-sized mechanical device is in the state in which a rotation shaft is horizontal in many cases. In such a usage mode, the cage is erected and thus a ring part in the cage (for example, a large-diameter ring part in a conical roller bearing cage) tends to sag under its own weight, and the cage needs to be enhanced in rigidity.

In addition, since production volume of supersized cages is limited, it is necessary to suppress expense of metal molds for cages and reduce manufacturing costs as much as possible.

The manufacturing method of roller bearing cage as described in Patent Document 1 does not target at supersized cages. Thus, in the case of manufacturing supersized cages by the manufacturing method as described in Patent Document 1, there are problems in terms of manufacture and manufacturing facilities. Specifically, the weight of an intermediate part having undergone a drawing process becomes large, and thus a large-scaled chucker (handling device and positioning device for intermediate part) is needed to punch pocket holes one by one in sequence at an annular peripheral wall portion of the intermediate part by a pocket punching device. In addition, large pressurizing force is used for the pocket punching process, which requires a press machine with an oversized press capacity.

In addition, the cage is manufactured by performing a drawing process, a pocket punching process, an edge cutting process, and a surface pressing process on a circular material plate punched out from a steel plate, and thus an upper edge-side ring part having undergone the edge cutting process (a large-diameter ring part in a conical roller bearing cage) is an almost circular in shape extending in an almost axial direction and thus is lower in rigidity in a radial direction. Accordingly, in the foregoing usage mode in which the rotation shaft is horizontal, it is difficult to achieve enhancement of rigidity required for supersized cages.

In the manufacturing method of roller bearing cage as described in Patent Document 2, there is needed a large number of press steps, which causes a problem of increases in metal mold expenses and manufacturing costs.

In addition, the spherical roller bearing cage as described in Patent Document 2 is a high-load capacity cage and thus is designed to be lower in overall height. Thus, to form a large diameter-side outward flange by a press process, it is necessary to make the thickness of the flange smaller than the thickness of the steel plate and press the flange by a press machine. Accordingly, the press machine needs to have a high pressing force.

Further, oversized press molds are needed in particular for supersized cages in a large number of press processes. This causes problems in relation to manufacture and manufacturing facilities that the press machine needs to have an oversized press capacity in particular for formation of a large diameter-side outward flange and the like.

Therefore, conventional spherical roller bearing cages as described in Patent Document 2 are only middle- or small-sized with an outer diameter of about 300 mm or less. Under present circumstances, spherical roller bearing cages with an outer diameter of about 300 mm or more are bowl-shaped cages or machined cages. Thus, for supersized cages in particular, there is room for improvement in both terms of costs and performance such as load capacity and the like.

In the case of manufacturing a supersized cage by the manufacturing method described in Patent Document 3 by which to separately fabricate the first member including the small-diameter ring part and the column parts and the second member including the large-diameter ring part, and then join and fix the first member and the second member by laser welding, the second punching step is performed such that, while a first punch including a pair of fan-shaped part punching parts is rotated at a predetermined angle around a central part as an axis, the first punch is driven into a circular material to form a plurality of fan-shaped parts (a plurality of column parts). At the foregoing step, after one fan-shaped part is punched by the first punch, the first punch is then rotated to punch the next adjacent fan-shaped part (column part). Thus, at the time of punching, the column part is prone to escape toward the adjacent part, and the shape accuracy of the fan-shaped parts (column parts) and the accuracy of forming the fan-shaped parts (column parts) at equal intervals (evenly in the circumferential direction) (pitch accuracy) tend to be deteriorated.

In addition, the second member (large-diameter ring part) is fabricated from a belt-like elongated member through the abutment portion processing step and the deforming and fixing step, and thus at manufacture of supersized cages, it is difficult to perform the deforming and fixing step at which the elongated member is cut and deformed in a circular shape and the cut ends thereof are joined and fixed to each other while maintaining desired rigidity.

Further, the second member (large-diameter ring part) is formed in an annular ring shape by deforming the elongated member in a circular shape. When the annular ring-shaped second member (large-diameter ring part) is attached to leading ends of the column parts of the first member which are erected at a predetermined taper angle with respect to the axial center through the folding step, the column parts and the second member are not orthogonal to each other. Accordingly, the corner portion of the second member (large-diameter ring part) contacts and slides on the large diameter-side end surfaces of the conical rollers stored in the pocket holes, and thus abrasion tends to advance at the portion.

Further, in the case of manufacturing an supersized cage by the manufacturing method described in Patent Document 3 by which to separately fabricate the first member including the large-diameter ring part and the column parts and the second member including the small-diameter ring part, and then join and fix the first member and the second member by laser welding, the first punching step is performed such that, while a punch including a pair of fan-shaped part punching parts is rotated at a predetermined angle around a central part as an axis, the first punch is driven into a plate-like material to form a plurality of fan-shaped parts (a plurality of column parts). At the foregoing step, after one fan-shaped part is punched by the first punch, the first punch is then rotated to punch the next adjacent fan-shaped part. Thus, at the time of punching, the column part is prone to escape toward the adjacent part, and the shape accuracy of the fan-shaped parts (column parts) and the accuracy of forming the fan-shaped parts (column parts) at equal intervals (evenly in the circumferential direction) (pitch accuracy) tend to be deteriorated.

In addition, the second member (small-diameter ring part) is fabricated from a belt-like elongated member through the abutment portion processing step and the deforming and fixing step, and thus at manufacture of supersized cages, it is difficult to perform the deforming and fixing step at which the elongated member is cut and deformed in a circular shape and the cut ends thereof are joined and fixed to each other while maintaining desired rigidity.

Further, the second member (small-diameter ring part) is formed in an annular ring shape by deforming the elongated member in a circular shape. When the annular ring-shaped second member (small-diameter ring part) is attached to leading ends of the column parts of the first member which are erected at a predetermined taper angle with respect to the axial center through the folding step, the column parts and the second member are not orthogonal to each other. Accordingly, the corner portion of the second member (small-diameter ring part) contacts and slides on the small diameter-side end surfaces of the conical rollers stored in the pocket holes, and thus abrasion tends to advance at the portion.

Under the foregoing circumstances, an object of the present invention is to provide a manufacturing method of a roller bearing cage suited in particular to a supersized roller bearing, that is easy to improve rigidity, allows reduction of manufacturing costs, and facilitates dimension management and accuracy management for a pitch circle diameter and the like, and a method of manufacturing the same.

### Solution to problem

To solve the foregoing issue, a manufacturing method of a roller bearing cage having a diameter of 1 to 3 m according to the present invention is a manufacturing method of a cage configured such that a pair of ring parts axially separated is connected by a plurality of column parts sliding on an outer peripheral surface of a roller as a rolling element, and a plurality of pocket holes is evenly formed in a circumferential direction to store and hold the roller at a peripheral wall portion, wherein the manufacturing method includes: a base body blank cutting step of cutting a steel having a thickness of 8 to 16 mm so as to protrude portions to be the column parts outward in a radial direction from an outer peripheral portion of a disc-shaped member with a central hole and form engagement convexes at leading ends of the portions to be the column parts, thereby to obtain a base body blank; a folding step of folding the portions to be the column parts in the base body blank along the outer peripheral portion of the disc-shaped member; a connection body blank cutting step of cutting a steel plate having a thickness of 8 to 16 mm so as to form engagement concaves evenly in the circumferential direction in an annular ring part for engagement with the engagement convexes, thereby to obtain a connection body blank; a joining and fixing step of joining and fixing the base body and the connection body while the engagement convexes of the base body formed from the base body blank are engaged with the engagement concaves of the connection body formed from the connection body blank; a surface pressing step of surface-pressing the portions to be the column parts to form and finish contact surfaces with respect to the roller as predetermined inclined surfaces, the surface pressing step being performed after the base body blank cutting step or the folding step; and an inner-diameter removing step of removing an excessive thick portion of an inner-diameter portion of the disc-shaped member to meet a desired inner diameter, the inner-diameter removing step being performed after the folding step in the case where the surface pressing step is performed after the base body blank cutting step, or being performed after the surface pressing step in the case where the surface pressing step is performed after the folding step, or being performed after the joining and fixing step (Claim 1).

According to the manufacturing method in the invention according to Claim 1 the base body and the connection body are manufactured based on their respective blanks obtained by cutting and processing steel plates through laser-cutting or the like at the base body blank cutting step and the connection body blank cutting step, which eliminates the need for a metal mold for punching pocket holes at manufacture of supersized cages and facilitates assurance of shape accuracy.

In addition, the cage is manufactured by a combination of a cutting process of blanks by laser cutting or the like and a press process of the blanks, which allows easy processing and reduces mold costs in particular at manufacture of supersized cages that are small in production volume.

Further, in the case where the surface pressing step is performed after the folding step, it is easier to perform dimension management for a pitch circle diameter and the like of the cage, as compared to the case where the folding step is performed after the surface pressing step.

Furthermore, the base body and the connection body as separate members are assembled into a cage, and thus the materials for and shapes of the base body and the connection body are easy to change, which facilitates acquisition of desired strength and rigidity.

Moreover, since the column parts of the base body are formed by folding along the outer peripheral portion of the ring part of the base body at the folding step, no erected portions (window seats of pocket holes) are formed between the column parts of the base body and thus the pocket holes can be made long.

This makes it possible to extend the entire length of the rollers and increase the load capacity of the roller bearing.

Further, the disc-shaped member has at the central portion the central hole with a diameter smaller than the inner diameter of the cage, and the central hole can function as a guide hole in the pressing process. In addition, the disc-shaped member has a relatively large thick portion and thus facilitates acquisition of rigidity in the drawing process.

Further, to solve the foregoing issue, a manufacturing method of a roller bearing cage having a diameter of 1 to 3 m according to the present invention is a manufacturing method of a cage configured such that a pair of ring parts axially separated is connected by a plurality of column parts sliding on an outer peripheral surface of a roller as a rolling element, and a plurality of pocket holes is evenly formed in a circumferential direction to store and hold the roller at a peripheral wall portion, wherein the manufacturing method includes: a base body constitutional blank cutting step of cutting a steel plate having a thickness of 8 to 16 mm so as to protrude the portions to be the column parts outward in the radial direction from the outer peripheral portion of a plurality of fan-shaped divided plates obtained by dividing the disc-shaped member having the central hole evenly in the circumferential direction, and form the engagement convexes at the leading ends of the portions to be the column parts, thereby to obtain a plurality of base body constitutional blanks constituting the base body; a folding step of folding the portions to be the column parts in the base body constitutional blanks along the outer peripheral portion of the fan-shaped divided plates; a base body constitutional blank joining step of joining the fan-shaped divided plates in the plurality of the base body constitutional blanks with the folded portions to be the column parts into the shape of the disc-shaped member, thereby to obtain an integrated base body constitutional blank joint body; a connection body constitutional blank cutting step of cutting a steel plate having a thickness of 8 to 16 mm so as to divide an annular ring part evenly in the circumferential direction, thereby to obtain a plurality of connection body constitutional blanks constituting the connection body; a connection body constitutional blank joining step of joining the plurality of connection body constitutional blanks into the annular ring shape, thereby to obtain an integrated connection body constitutional blank joint body; an engagement concave forming step of forming engagement concaves evenly in the circumferential direction in the connection body constitutional blank joint body for engagement with the engagement convexes; a joining and fixing step of joining and fixing the base body and the connection body while the engagement convexes of the base body formed from the base body constitutional blank joint body are engaged with the engagement concaves of the connection body formed from the connection body constitutional blank joint body; a surface pressing step of surface-pressing the portions to be the column parts to form and finish contact surfaces with respect to the roller as predetermined inclined surfaces, the surface pressing step being performed after the base body constitutional blank cutting step or the folding step; and an inner-diameter removing step of removing an excessive thick portion of an inner-diameter portion of the disc-shaped member to meet a desired inner diameter, the inner-diameter removing step being performed after the folding step in the case where the surface pressing step is performed after the base body constitutional blank cutting step, or being performed after the surface pressing step in the case where the surface pressing step is performed after the folding step, or being performed after the joining and fixing step (Claim 2).

According to the manufacturing method in the invention according to Claim 2 in addition to the advantages of the invention according to Claim 1 the base body is formed from the base body constitutional blank joint body obtained by joining and integrating the plurality of base body constitutional blanks and the connection body is formed from the connection body constitutional blank joint body obtained by joining and integrating the connection body constitutional blanks, which makes it possible to improve the yield of the material for the base body or the connection body and thus reduce material costs.

In addition, since the folding step is performed on the base body constitutional blanks formed at the base body constitutional blank cutting step, which allows size reduction of the drawing mold for use at the folding step.

Further, to solve the foregoing issue, a manufacturing method of a roller bearing cage having a diameter of 1 to 3 m according to the present invention is a manufacturing method of a cage configured such that a pair of ring parts axially separated is connected by a plurality of column parts sliding on an outer peripheral surface of a roller as a rolling element, and a plurality of pocket holes is evenly formed in a circumferential direction to store and hold the roller at a peripheral wall portion, wherein the manufacturing method includes: a base body blank cutting step of cutting a steel plate having a thickness of 8 to 16 mm so as to protrude portions to be the column parts outward in a radial direction from an outer peripheral portion of a disc-shaped member with a central hole and form engagement convexes at leading ends of the portions to be the column parts, thereby to obtain a base body blank; a folding step of folding the portions to be the column parts in the base body blank along the outer peripheral portion of the disc-shaped member; a connection body blank cutting step of cutting a steel plate having a thickness of 8 to 16 mm so as to form engagement concaves evenly in the circumferential direction in an annular ring part for engagement with the engagement convexes, thereby to obtain a connection body blank; a joining and fixing step of joining and fixing the base body and the connection body while the engagement convexes of the base body formed from the base body blank are engaged with the engagement concaves of the connection body formed from the connection body blank; a rough surface pressing step of surface-pressing the portions to be the column parts to form the contact surfaces with respect to the roller by a surface press amount smaller than a final surface press amount, the rough surface pressing step being performed after the base body blank cutting step or the folding step, or a laser-cut inclined surface forming step of forming by laser cut inclined surfaces equivalent to the inclined surfaces formed at the rough surface pressing step, the laser-cut inclined surface forming step being performed in the course of the base body blank cutting step or after the base body blank cutting step; a finished surface pressing step of surface-pressing the column parts to form the contact surfaces with respect to the roller by the final surface press amount, the finished surface pressing step being performed after the joining and fixing step; and an inner-diameter removing step of removing an excessive thick portion of an inner-diameter portion of the disc-shaped member with a central hole in the base body to meet a desired inner diameter (Claim 3).

According to the manufacturing method in the invention according to Claim 3, in addition to the advantages of the invention according to Claim 1 while the base body having undergone the rough surface pressing step or the laser-cut inclined surface forming step and the connection body are joined and fixed to each other at the joining and fixing step, the column parts are surface-pressed by the final surface press amount at the contact surfaces with respect to the roller at the finished surface pressing step, which allows fine-adjustment of the dimension accuracy and thus facilitates acquisition of the predetermined dimension accuracy.

In addition, when the laser-cut inclined surface forming step is performed, even if the formed inclined surface is a rough surface, a flat and smooth surface of a thrust press mold for use at the finished surface pressing step can be transferred to form favorable surface-press surfaces on the column parts.

According to the laser-cut inclined surface forming step, the portions to be the column parts are not extended or deformed unlike the case where the surface pressing is performed using a press mold.

Further, a laser application machine allowing three-dimensional processing, for example, can be used to perform the laser-cut inclined surface forming step in the course of the base body blank cutting step to significantly simplify the manufacturing process.

To solve the foregoing issue, a manufacturing method of a roller bearing cage having a diameter of 1 to 3 m according to the present invention is a manufacturing method of a cage configured such that a pair of ring parts axially separated is connected by a plurality of column parts sliding on an outer peripheral surface of a roller as a rolling element, and a plurality of pocket holes is evenly formed in a circumferential direction to store and hold the roller at a peripheral wall portion, wherein the manufacturing method includes: a base body blank cutting step of cutting a steel plate having a thickness of 8 to 16 mm so as to protrude portions to be the column parts inward in a radial direction from an inner peripheral portion of an annular ring-shaped member and form engagement convexes at leading ends of the portions to be the column parts, thereby to obtain a base body blank; a folding step of folding the portions to be the column parts in the base body blank along the inner peripheral portion of the annular ring-shaped member; a connection body blank cutting step of cutting a steel plate having a thickness of 8 to 16 mm so as to form engagement concaves evenly in the circumferential direction in an annular ring part for engagement with the engagement convexes, thereby to obtain a connection body blank; a joining and fixing step of joining and fixing the base body and the connection body while the engagement convexes of the base body formed from the base body blank are engaged with the engagement concaves of the connection body formed from the connection body blank; and a surface pressing step of surface-pressing the portions to be the column parts to form and finish contact surfaces with respect to the roller as predetermined inclined surfaces, the surface pressing step being performed after the base body blank cutting step or the folding step (Claim 4).

According to the manufacturing method in the invention according to Claim 4, the base body and the connection body are manufactured based on their respective blanks obtained by cutting and processing steel plates through laser-cutting or the like at the base body blank cutting step and the connection body blank cutting step, which eliminates the need for a metal mold for punching pocket holes at manufacture of supersized cages and facilitates assurance of shape accuracy.

In addition, the cage is manufactured by a combination of a cutting process of blanks by laser cutting or the like and a press process of the blanks, which allows easy processing and reduces mold costs in particular at manufacture of supersized cages that are small in production volume.

Further, in the case where the surface pressing step is performed after the folding step, it is easier to perform dimension management for a pitch circle diameter and the like of the cage, as compared to the case where the folding step is performed after the surface pressing step.

Furthermore, the base body and the connection body as separate members are assembled into a cage, and thus the materials for and shapes of the base body and the connection body can be easily changed, which facilitates acquisition of desired strength and rigidity.

Moreover, since the column parts of the base body are formed by folding along the inner peripheral portion of the ring part of the base body at the folding step, no erected portions (window seats of pocket holes) are formed between the column parts of the base body and thus the pocket holes can be made long.

This makes it possible to extend the entire length of the rollers and increase the load capacity of the roller bearing.

In addition, when the column parts of the base body are formed by folding along the inner peripheral portion of the ring part of the base body, the base body blank formed by cutting a steel plate is smaller in size than that with the column parts by folding along the outer peripheral portion of the ring part of the base body, which makes it possible to increase the yield of the material and thus reduce material costs.

Further, to solve the foregoing issue, a manufacturing method of a roller bearing cage having a diameter of 1 to 3 m according to the present invention is a manufacturing method of a cage configured such that a pair of ring parts axially separated is connected by a plurality of column parts sliding on an outer peripheral surface of a roller as a rolling element, and a plurality of pocket holes is evenly formed in a circumferential direction to store and hold the roller at a peripheral wall portion, wherein the manufacturing method includes: a base body constitutional blank cutting step of cutting a steel plate having a thickness of 8 to 16 mm so as to protrude the portions to be the column parts inward in the radial direction from the inner peripheral portion of a plurality of arc-shaped divided plates obtained by dividing the annular ring-shaped member evenly in the circumferential direction, and form the engagement convexes at the leading ends of the portions to be the column parts, thereby to obtain a plurality of base body constitutional blanks constituting the base body; a folding step of folding the portions to be the column parts in the base body constitutional blanks along the inner peripheral portion of the arc-shaped divided plates; a base body constitutional blank joining step of joining the arc-shaped divided plates in the plurality of the base body constitutional blanks with the folded portions to be the column parts into the shape of the annular ring-shaped member, thereby to obtain an integrated base body constitutional blank joint body; a connection body constitutional blank cutting step of cutting a steel plate having a thickness of 8 to 16 mm so as to divide an annular ring part evenly in the circumferential direction, thereby to obtain a plurality of connection body constitutional blanks constituting the connection body; a connection body constitutional blank joining step of joining the plurality of connection body constitutional blanks into the annular ring shape, thereby to obtain an integrated connection body constitutional blank joint body; an engagement concave forming step of forming engagement concaves evenly in the circumferential direction in the connection body constitutional blank joint body for engagement with the engagement convexes; a joining and fixing step of joining and fixing the base body and the connection body while the engagement convexes of the base body formed from the base body constitutional blank joint body are engaged with the engagement concaves of the connection body formed from the connection body constitutional blank joint body; and a surface pressing step of surface-pressing the portions to be the column parts to form and finish contact surfaces with respect to the roller as predetermined inclined surfaces, the surface pressing step being performed after the base body constitutional blank cutting step or the folding step (Claim 5).

According to the manufacturing method in the invention according to Claim 5, in addition to the advantages of the invention according to Claim 4, the base body is formed from the base body constitutional blank joint body obtained by joining and integrating the plurality of base body constitutional blanks and the connection body is formed from the connection body constitutional blank joint body obtained by joining and integrating the connection body constitutional blanks, which makes it possible to improve the yield of the material for the base body or the connection body and thus reduce material costs.

In addition, since the folding step is performed on the base body constitutional blanks formed at the base body constitutional blank cutting step, which allows size reduction of the drawing mold for use at the folding step.

Further, to solve the foregoing issue, a manufacturing method of a roller bearing having a diameter of 1 to 3 m according to the present invention is a manufacturing method of a cage configured such that a pair of ring parts axially separated is connected by a plurality of column parts sliding on an outer peripheral surface of a roller as a rolling element, and a plurality of pocket holes is evenly formed in a circumferential direction to store and hold the roller at a peripheral wall portion, wherein the manufacturing method includes: a base body blank cutting step of cutting a steel plate having a thickness of 8 to 16 mm so as to protrude portions to be the column parts inward in a radial direction from an inner peripheral portion of an annular ring-shaped member and form engagement convexes at leading ends of the portions to be the column parts, thereby to obtain a base body blank; a folding step of folding the portions to be the column parts in the base body blank along the inner peripheral portion of the annular ring-shaped member; a connection body blank cutting step of cutting a steel plate having a thickness of 8 to 16 mm so as to form engagement concaves evenly in the circumferential direction in an annular ring part for engagement with the engagement convexes, thereby to obtain a connection body blank; a joining and fixing step of joining and fixing the base body and the connection body while the engagement convexes of the base body formed from the base body blank are engaged with the engagement concaves of the connection body formed from the connection body blank; a rough surface pressing step of surface-pressing the portions to be the column parts to form the contact surfaces with respect to the roller by a surface press amount smaller than a final surface press amount, the rough surface pressing step being performed after the base body blank cutting step or the folding step, or a laser-cut inclined surface forming step of forming by laser cut inclined surfaces equivalent to the inclined surfaces formed at the rough surface pressing step, the laser-cut inclined surface forming step being performed in the course of the base body blank cutting step or after the base body blank cutting step; and a finished surface pressing step of surface-pressing the column parts to form the contact surfaces with respect to the roller by the final surface press amount, the finished surface pressing step being performed after the joining and fixing step (Claim 6).

According to the manufacturing method in the invention according to Claim 6, in addition to the advantages of the invention according to Claim 4, while the base body having undergone the rough surface pressing step or the laser-cut inclined surface forming step and the connection body are joined and fixed to each other at the joining and fixing step, the column parts are surface-pressed by the final surface press amount at the contact surfaces with respect to the roller at the finished surface pressing step, which allows fine-adjustment of the dimension accuracy and thus facilitates acquisition of the predetermined dimension accuracy.

In addition, when the laser-cut inclined surface forming step is performed, even if the formed inclined surface is a rough surface, a flat and smooth surface of a thrust press mold for use at the finished surface pressing step can be transferred to form favorable surface-press surfaces on the column parts.

According to the laser-cut inclined surface forming step, the portions to be the column parts are not extended or deformed unlike the case where the surface pressing is performed using a press mold.

Further, a laser application machine allowing three-dimensional processing, for example, can be used to perform the laser-cut inclined surface forming step in the course of the base body blank cutting step to significantly simplify the manufacturing process.

It is preferred that the roller is a conical roller or a spherical roller, and a shaping step of forming the connection body blank or the connection body constitutional blank joint body in a disc-spring shape so as to be orthogonal to the column parts of the base body.

According to the foregoing embodiment, in the conical roller bearing cage or the spherical roller bearing cage manufactured by the manufacturing method, a corner portion of the ring part of the connection body does not contact or slide on an end surface of the conical roller or the spherical roller stored in the pocket holes, and the ring part of the connection body enters into surface contact with the end surface, which makes it possible to suppress the progress of abrasion occurring such as in the case where the corner portion contacts and slides on the end surface.

### Advantageous Effects of Invention

As described above, according to the manufacturing method of the roller bearing cage according to the present invention, it is possible to produce significant advantages such as: (A) since the base body and the connection body as separate members are assembled into the cage, the materials for and the shapes of the base body and the connection body can be easily changed, which facilitates acquisition of desired strength and rigidity; (B) the base body and the connection body are manufactured based on their respective blanks obtained by cutting and processing steel plates through laser-cutting or the like, which eliminates the need for a metal mold for punching pocket holes at manufacture of supersized cages and facilitates assurance of shape accuracy; (C) the cage is manufactured by a combination of a cutting process of blanks by laser cutting or the like and a press process of the blanks, which allows easy processing and reduces mold costs in particular at manufacture of supersized cages that are small in production volume; (D) since the column parts of the base body are formed by folding along the outer peripheral portion of the ring part of the base body or are formed by folding along the inner peripheral portion of the ring part of the base body, no erected portions are formed between the column parts of the base body and thus the pocket holes can be made long, which makes it possible to extend the entire length of the rollers and increase the load capacity of the roller bearing; (E) when the column parts of the base body are formed by folding along the inner peripheral portion of the ring part of the base body, the base body blank formed by cutting a steel plate is smaller in size than that with the column parts by folding along the outer peripheral portion of the ring part of the base body, which makes it possible to increase the yield of the material and thus reduce material costs; (F) when at least one of the base body and the connection body is formed from a joint body in which a plurality of divisions evenly divided in the circumferential direction is joined and integrated, it is possible to improve the yield of materials and reduce material costs; and (G) when the ring part of the connection body is formed in a disc-spring shape so as to be orthogonal to the column parts in the conical roller bearing cage or the spherical roller bearing cage, the ring part of the connection body enters into surface contact with the end surface of the roller, which makes it possible to suppress the progress of abrasion.

### Brief Description of the Drawings

Fig. 1(a) is a plane view of a roller bearing cage (conical roller bearing cage) according to a first embodiment manufactured with a method of the present invention, and Fig. 1(b) is an enlarged perspective view of major components of the same;

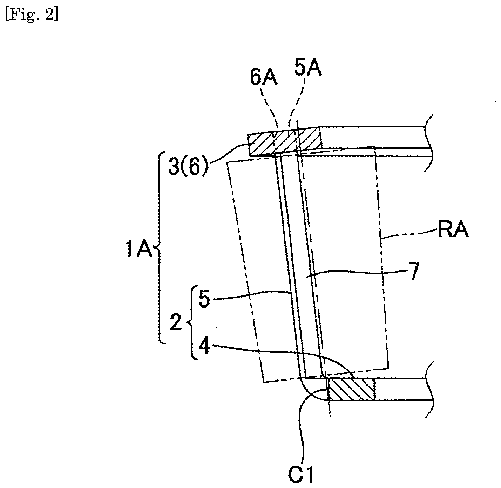

Fig. 2 is an enlarged longitudinal front view of major components of the same;

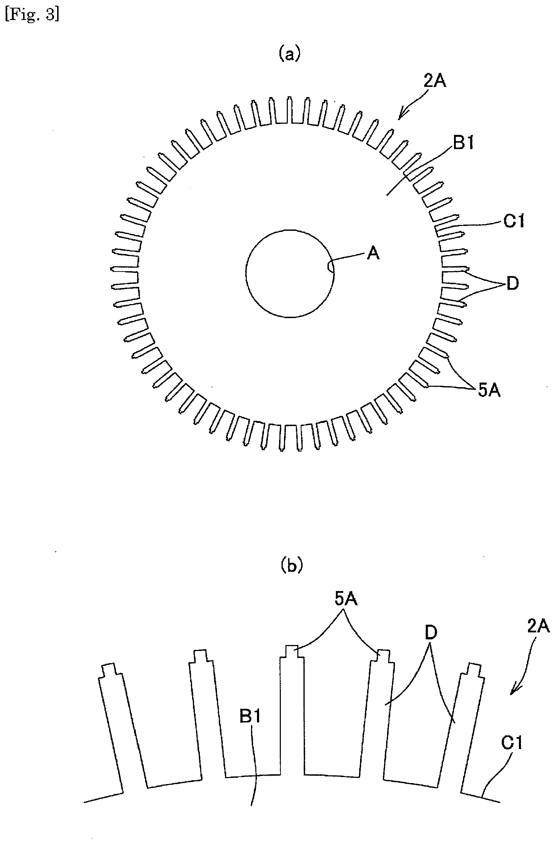

Fig. 3 is a diagram showing a part processed at a base body blank cutting step: Fig. 3(a) is a plane view and Fig. 3(b) is an enlarged plane view of major components;

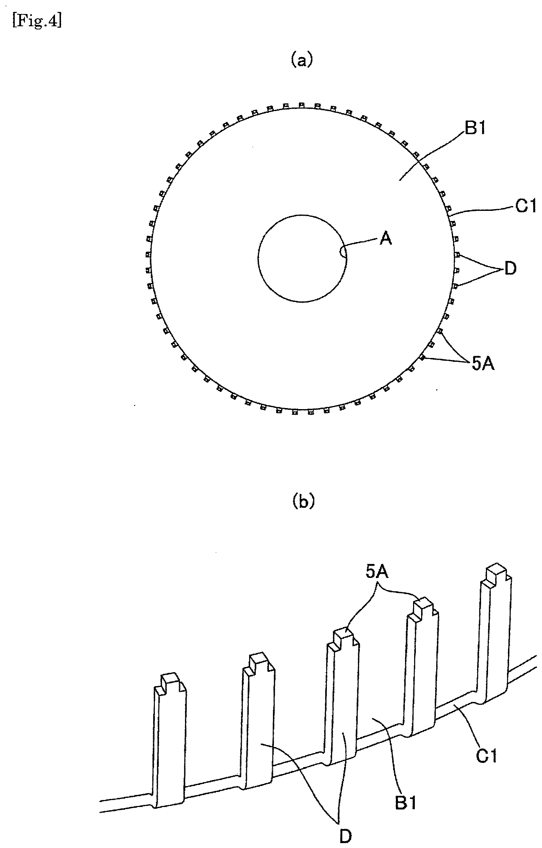

Fig. 4 is a diagram showing a part processed at a folding step: Fig. 4(a) is a plane view and Fig. 4(b) is an enlarged perspective view of major components;

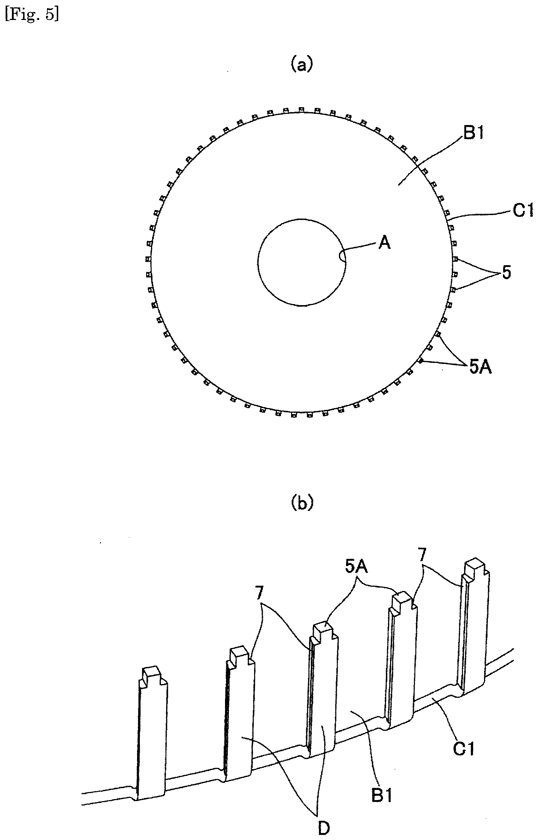

Fig. 5 is a diagram showing a part processed at a surface pressing step: Fig. 5(a) is a plane view and Fig. 5(b) is an enlarged perspective view of major components;
Fig. 6 is a diagram showing a part processed at an inner diameter removing step: Fig. 6(a) is a plane view and Fig. 6(b) is an enlarged perspective view of major components;

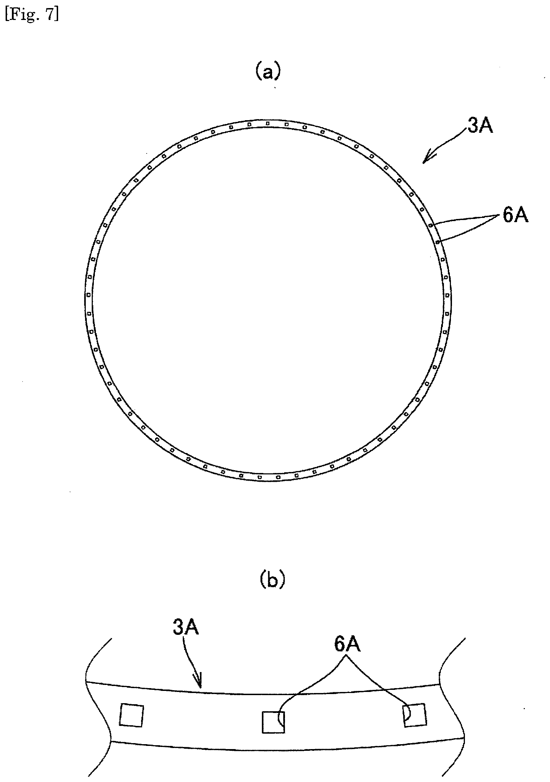

Fig. 7(a) is a plane view of a part processed at a connected body blank cutting step and Fig. 7(b) is an enlarged plane view of major components of the same;

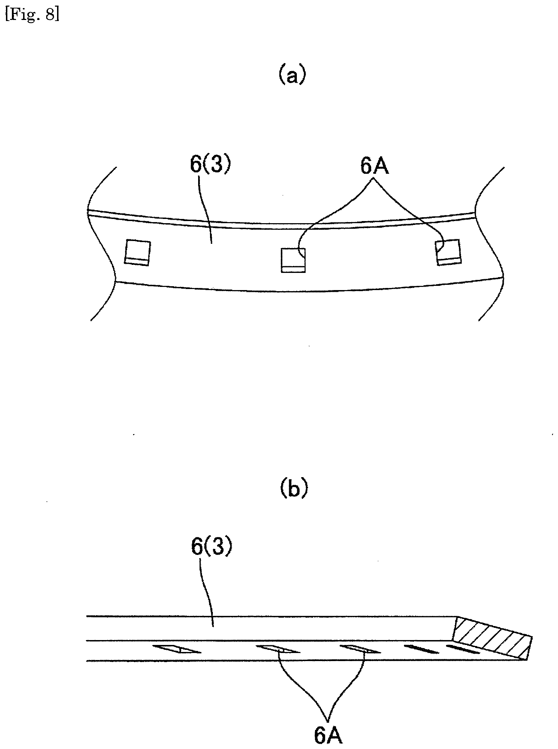

Fig. 8(a) is an enlarged plane view of major components of a part processed at a shaping step, and Fig. 8(b) is an enlarged perspective view of major components cut with planes in a radial direction and an axial direction of the part processed at the shaping step;

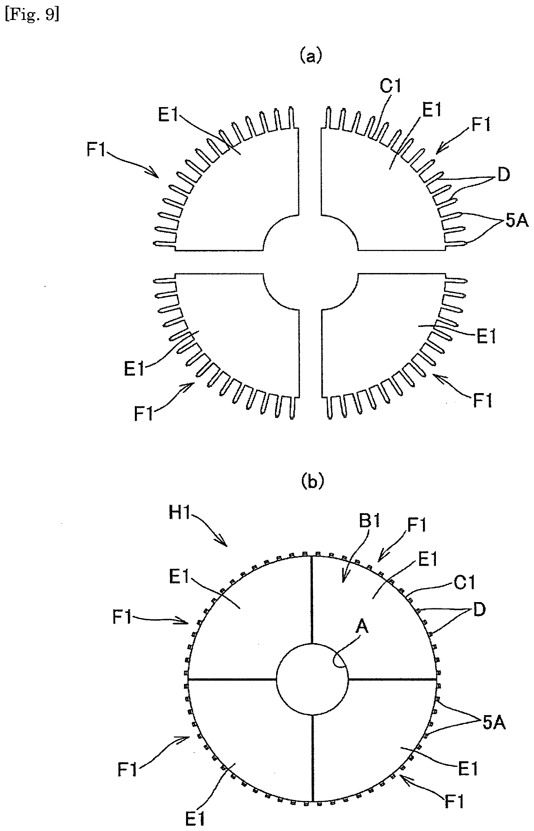

Fig. 9 is a plane view of an example of a base body that is formed from a joint body obtained by joining together a plurality of divisions evenly divided in a circumferential direction: Fig. 9(a) shows four base body constitutional blanks obtained by dividing circumferentially the base body blank into quarters, and Fig. 9(b) shows a base body constitutional blank joint body in which the four base body constitutional blanks are joined and integrated;

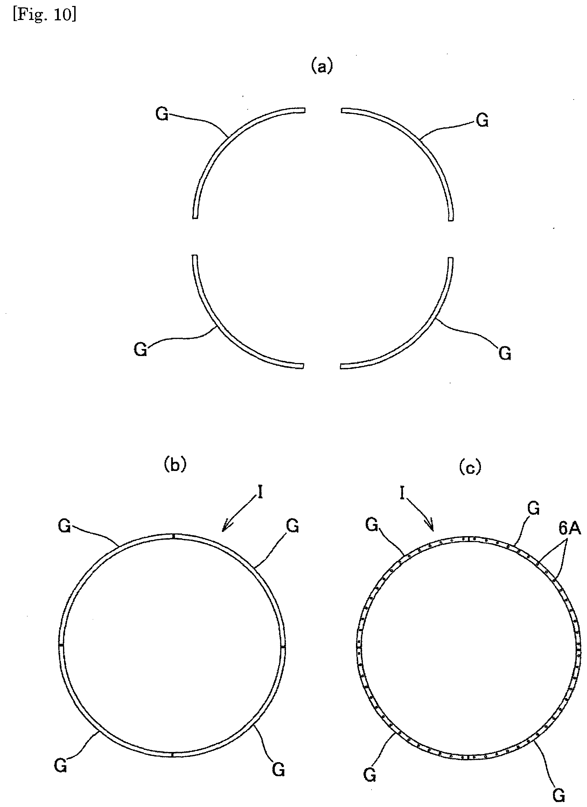

Fig. 10 is a plane view of an example of a connection body that is formed from a joint body obtained by joining together a plurality of divisions evenly divided in a circumferential direction: Fig. 10(a) shows four connection body constitutional blanks obtained by dividing circumferentially the connection body blank into quarters, and Fig. 10(b) shows a connection body constitutional blank joint body into which the four connection body constitutional blanks are joined and integrated;

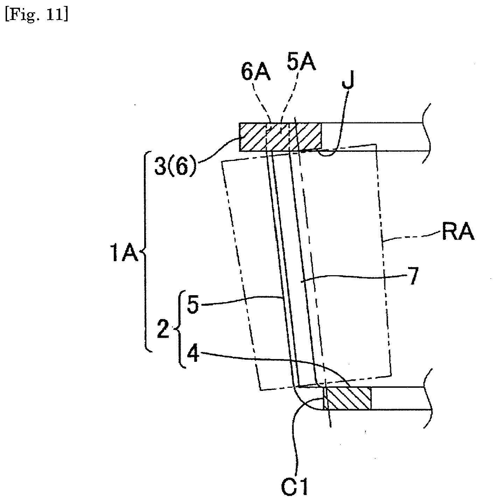

Fig. 11 is an enlarged longitudinal front view of major components, showing an example of a conical roller bearing cage in which a maximum outer-diameter portion is cylindrical;

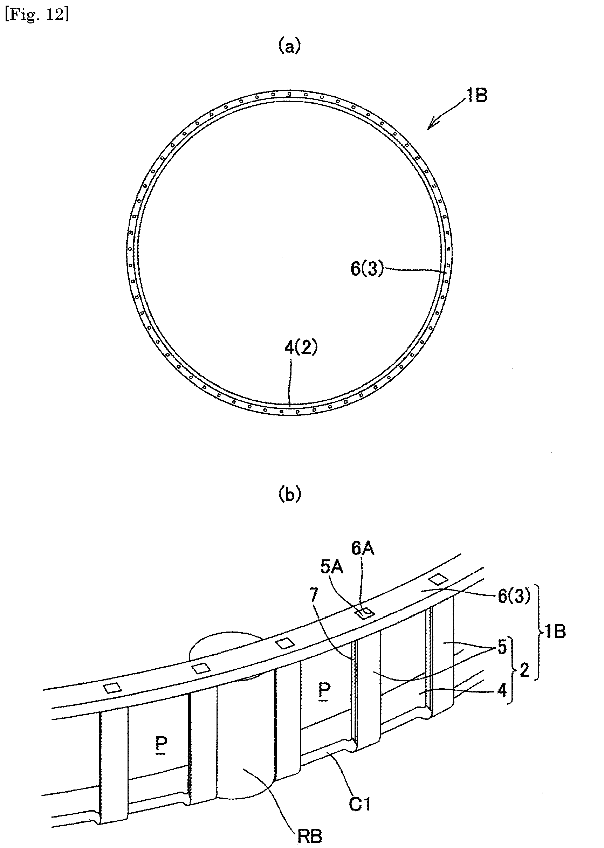

Fig. 12(a) is a plane view of a roller bearing cage (cylindrical roller bearing cage) according to a second embodiment manufactured with a method of the present invention,
   and Fig. 12(b) is an enlarged perspective view of major components of the same;

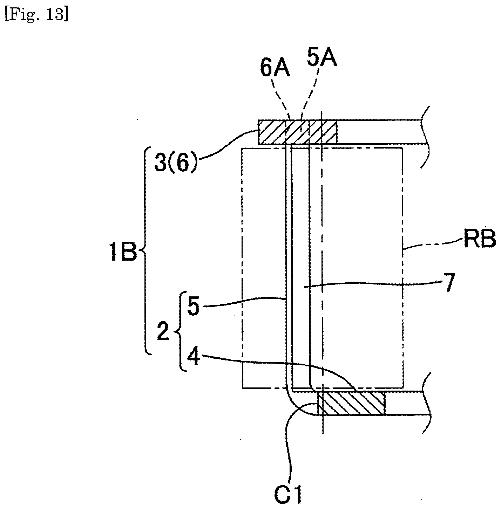

Fig. 13 is an enlarged longitudinal front view of major components of the same;

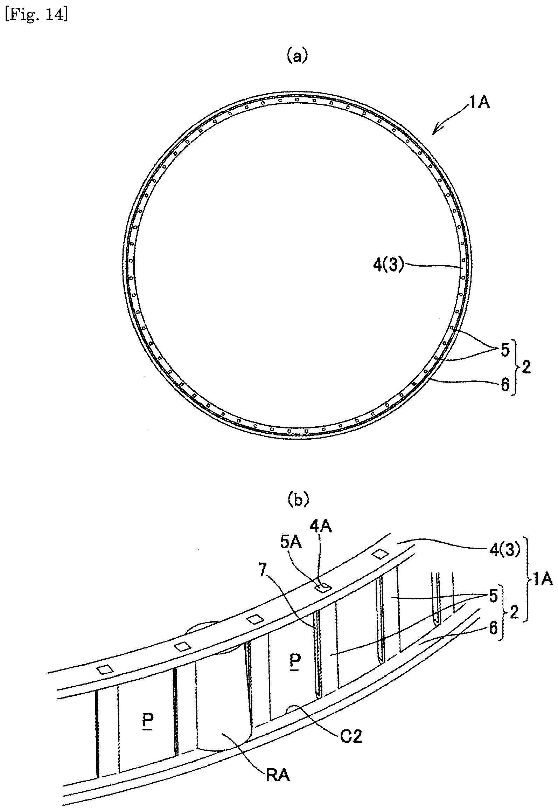

Fig. 14(a) is a plane view of a roller bearing cage (conical roller bearing cage) according to a third embodiment manufactured with a method of the present invention, and
   Fig. 14(b) is an enlarged perspective view of major components of the same;

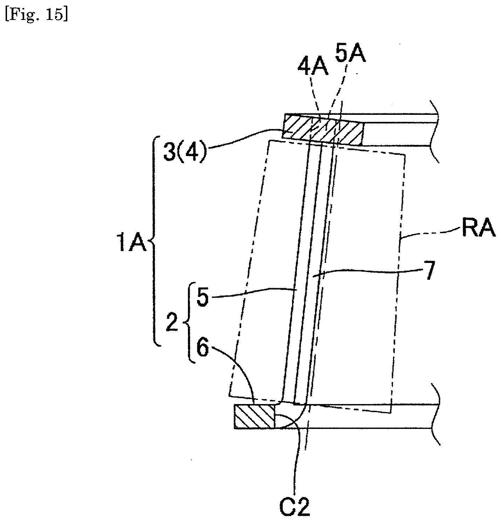

Fig. 15 is an enlarged longitudinal front view of major components of the same;

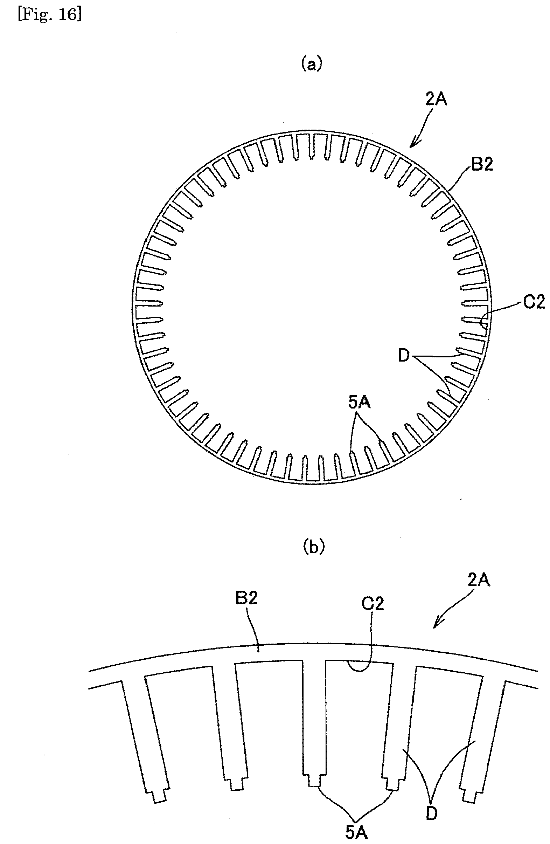

Fig. 16 is a diagram showing a part processed at a base body blank cutting step: Fig. 16(a) is a plane view and Fig. 16(b) is an enlarged plane view of major components;

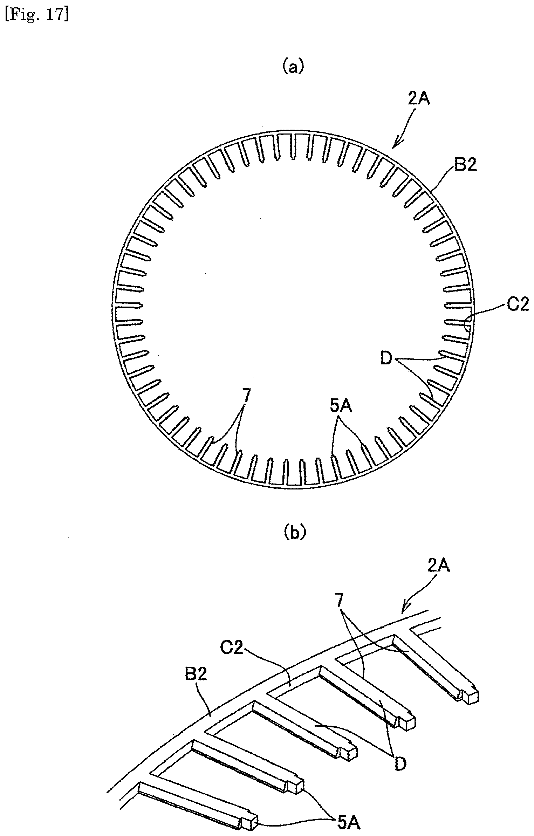

Fig. 17 is a diagram showing a part processed at a surface pressing step: Fig. 17(a) is a plane view and Fig. 17(b) is an enlarged perspective view of major components;

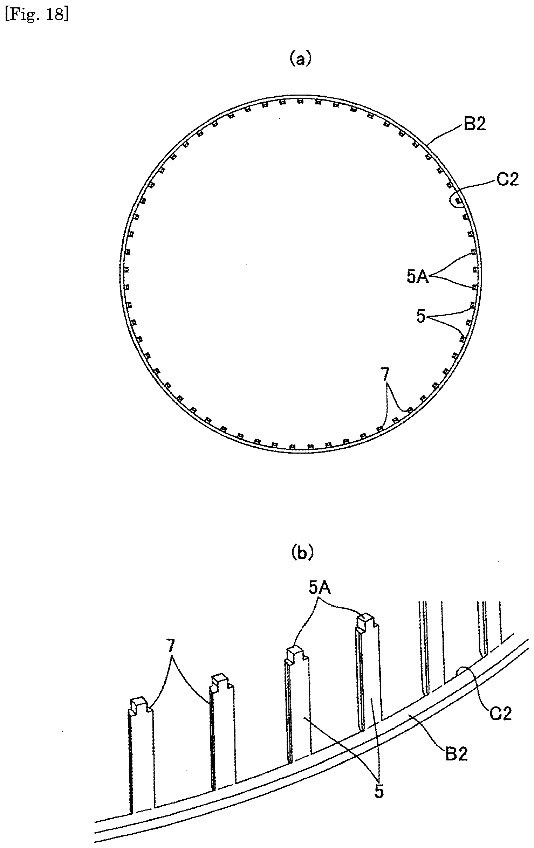

Fig. 18 is a diagram showing a part processed at a folding step: Fig. 18(a) is a plane view and Fig. 18(b) is an enlarged perspective view of major components;

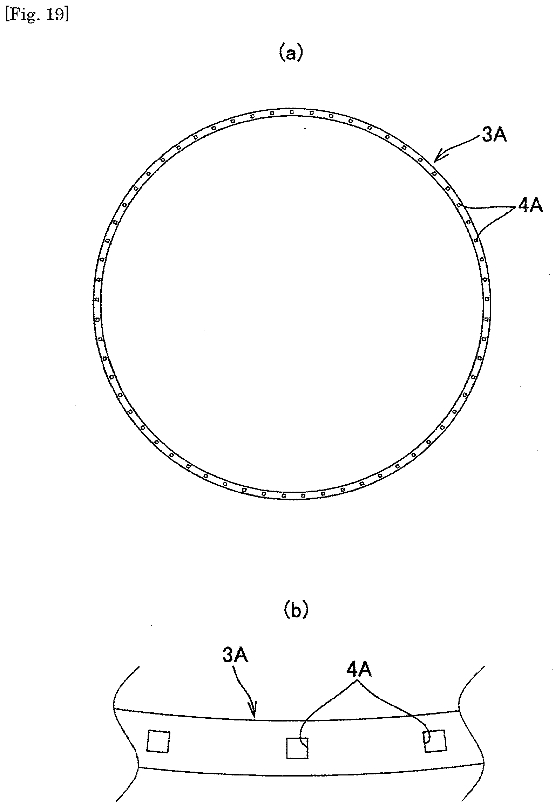

Fig. 19(a) is a plane view of a part processed at a connected body blank cutting step and Fig. 19(b) is an enlarged plane view of major components of the same;

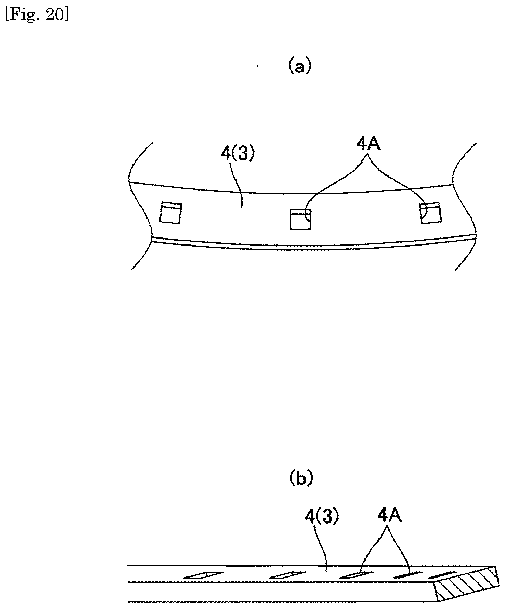

Fig. 20(a) is an enlarged plane view of major components of a part processed at a shaping step, and Fig. 20(b) is an enlarged perspective view of major components cut with planes in a radial direction and an axial direction of the part processed at the shaping step;

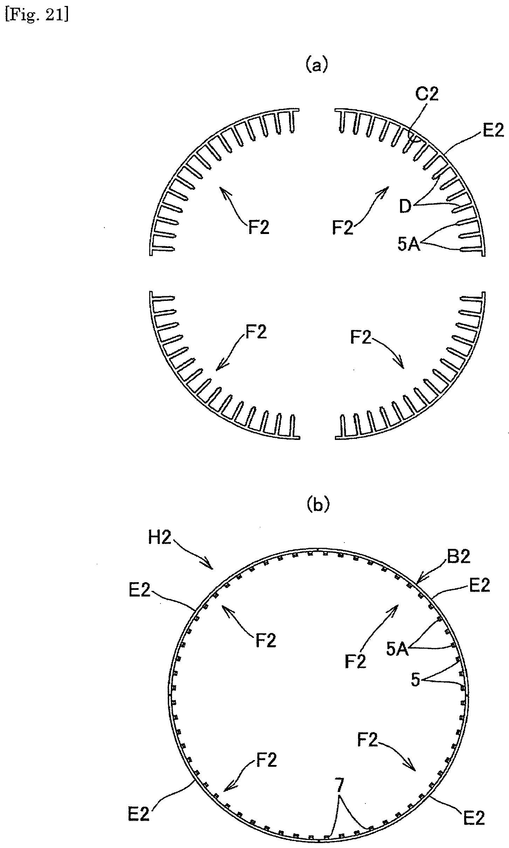

Fig. 21 is a plane view of an example of a base body that is formed from a joint body obtained by joining together a plurality of divisions evenly divided in a circumferential direction: Fig. 21(a) shows four base body constitutional blanks obtained by dividing circumferentially the base body blank into quarters, and Fig. 21(b) shows a base body constitutional blank joint body in which the four base body constitutional blanks are joined and integrated;

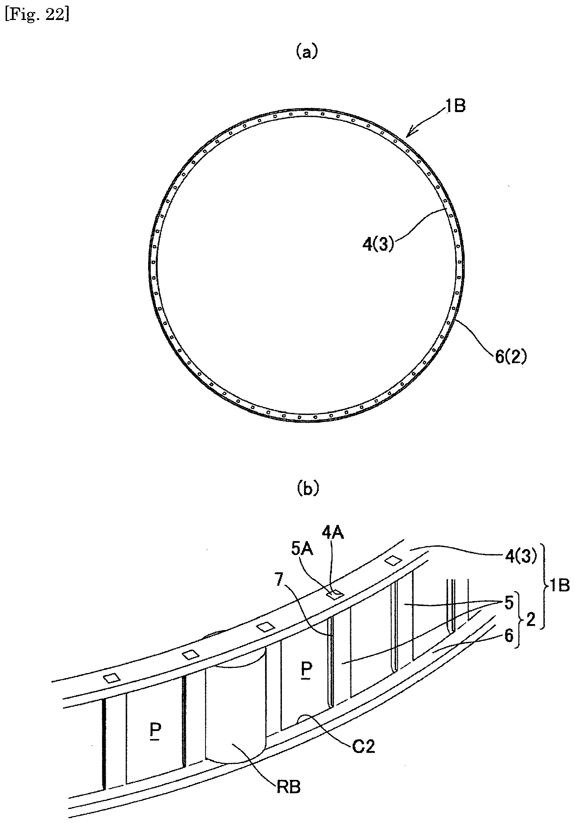

Fig. 22(a) is a plane view of a roller bearing cage (cylindrical roller bearing cage) according to a fourth embodiment manufactured with a method of the present invention, and
   Fig. 22(b) is an enlarged perspective view of major components of the same; and

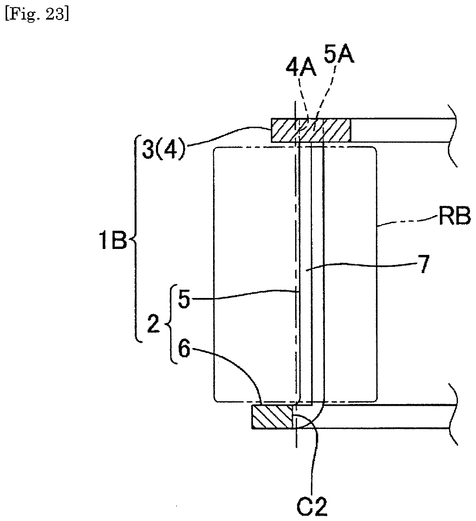

Fig. 23 is an enlarged longitudinal front view of major components of the same.

### Description of Embodiments

Next, manufacturing methods of the present invention will be described in detail with reference to the attached drawings. However, the present invention is not limited to the embodiments shown in the attached drawings but includes all manufacturing methods meeting the requirements described in the claims.

When a roller bearing cage is attached to a roller bearing, an axial direction of the bearing is designated as an axial direction and a radial direction of the same as a radial direction. The front view of a conical roller bearing cage according to a first embodiment is seen from a lateral side while a large-diameter ring part is located on the upper side (a small-diameter ring part is located on the lower side) and the axial direction is set perpendicular. The front view of a temporary assembly of a conical roller bearing cage according to a third embodiment is seen from a lateral side while a large-diameter ring part is located on the lower side (a small-diameter ring part is located on the upper side) and the axial direction is set perpendicular.

### First embodiment

As shown in the plane view of Fig. 1(a), the enlarged perspective view of major components of Fig. 1(b), and the enlarged longitudinal front view of major components of Fig. 2, a roller bearing cage (conical roller bearing cage 1A) according to a first embodiment manufactured with a method of the present invention is configured such that a pair of a small-diameter ring part 4 and a large-diameter ring part 6 axially separated from each other is connected by a plurality of column parts 5, 5, ... sliding on outer peripheral surfaces of conical rollers RA as rolling elements, and a plurality of pocket holes P, P, ... is evenly formed in a circumferential direction to store and hold the conical rollers RA, RA, ... in a peripheral wall portion of an inverted truncated cone side surface shape in the state where the small-diameter ring part 4 is located on the lower side and the axial direction is set perpendicular.

Fig. 1(a) does not show the conical rollers RA, RA, ....

The conical roller bearing cage 1A according to the first embodiment manufactured with a method of the present invention is formed by a base body 2 including the small-diameter ring part 4 and the column parts 5, 5, ... with engagement convexes 5A, 5A, ... at leading ends thereof, and a connection body 3 including a large-diameter ring part 6 with square holes 6A, 6A, ... as engagement concaves for engagement with the engagement convexes 5A, 5A, ... at the leading ends of the column parts 5, 5, ....

As separate members, the base body 2 and the connection body 3 are each manufactured based on a blank obtained by cutting and processing a steel plate such as a hot-rolled steel plate (e.g., SPHD). The column parts 5, 5, ... of the base body 2 are formed by folding along an outer peripheral portion C1 of the small-diameter ring part 4 of the base body 2.

Next, a manufacturing method of the present invention of the conical roller bearing cage 1A according to the first embodiment will be described in detail.

First, processing of the base body 2 will be described.

### (Base body blank cutting step)

As shown in the plane view of Fig. 3(a) and the enlarged plane view of major components of Fig. 3(b), a base body blank cutting step is performed to obtain a base body blank 2A by cutting a steel plate through laser cutting such that portions D, D, ... to be the column parts 5, 5, ... are protruded outward in the radial direction from the outer peripheral portion C1 of a disc-shaped member B1 having a central hole A, and the engagement convexes 5A, 5A, ... are formed at the leading ends of the portions D, D, ... to be the column parts 5, 5, ....

The foregoing cutting is not limited to laser cutting but may be plasma cutting, wire-cut discharge machining, or the like.

The shape of the engagement convexes 5A formed at the leading ends of the portions D to be the column parts 5 is almost rectangular in planer view, for example, and is square-columnar as shown in Figs. 1(b) and 3(b), having a protrusion formed at a circumferential center and a seat surface at front and back sides of the circumferential direction. The engagement convexes 5A are preferably tapered taking into account ease of connection with the connection body 3 at a joining/fixing step described later.

### (Folding step)

Next, a folding step is performed on the base body blank 2A shown in Fig. 3 to fold the portions D, D, ... to be the column parts 5, 5, ... in the shape of an inverted truncated cone side surface using a drawing mold, along the outer peripheral portion C1 of the disc-shaped member B1, as shown in the plane view of Fig. 4(a) and the enlarged perspective view of major components of Fig. 4(b).

The disc-shaped member B1 has at the central portion the central hole A with a diameter smaller than the inner diameter of the cage, and the central hole A can function as a guide hole in the pressing process. In addition, the disc-shaped member B1 has a relatively large thick portion and thus facilitates acquisition of rigidity at the small-diameter side in the drawing process.

### (Surface pressing step)

Next, a surface pressing step is performed to surface-press the folded portions D, D to be the column parts 5, 5, ... so as to form contact surfaces with respect to the conical rollers RA, and finish the contact surfaces as predetermined inclined surfaces (surface-press surfaces) 7, as shown in the plane view of Fig. 5(a) and the enlarged perspective view of major components of Fig. 5(b).

### (Inner-diameter removing step)

Next, an inner-diameter removing step is performed to remove the excessive thick portion of the inner-diameter portion of the disc-shaped member B1 by a turning process, a laser cutting process, a press process, or the like so as to meet a predetermined inner diameter, as shown in the plane view of Fig. 6(a) and the enlarged perspective view of major components of Fig. 6(b), thereby to obtain the base body 2.

Next, processing of the connection body 3 will be described.

### (Connection body blank cutting step)

A connection body blank cutting step is performed to obtain a connection body blank 3A by cutting a steel plate through laser cutting to form a horizontal annular ring part extending in the radial direction and having the square holes 6A, 6A, ... formed evenly in the circumferential direction as engagement concaves for engagement with the engagement convexes 5A, 5A, ..., as shown in the plane view of Fig. 7(a) and the enlarged plane view of major components of Fig. 7(b).

The foregoing cutting process is not limited to laser cutting but may be plasma cutting, wire-cut discharge machining, or the like.

### (Shaping step)

Next, a shaping step is performed to shape the connection body blank 3A by a press process or roll process into a disc-spring shape high at an inner-diameter portion and low at an outer-diameter portion as shown in the enlarged plane view of major components of Fig. 8(a) and the enlarged perspective view of major components of Fig. 8(b) so as to be orthogonal to the column parts 5, 5, ... of the base body 2, thereby to obtain the connection body 3.

### (Joining and fixing step)

Next, a joining and fixing step is performed to, while the engagement convexes 5A, 5A, ... of the base body 2 shown in Fig. 6 including the small-diameter ring part 4 and the column parts 5, 5, ... formed through the base body blank cutting step, the folding step, the surface pressing step, and the inner-diameter removing step are engaged with the engagement concaves 6A, 6A, ... of the connection body 3 including the large-diameter ring part 6 shown in Fig. 8 formed through the connection body blank cutting step and the shaping step, join and fix together the base body 2 and the connection body 3 by a welding process such as laser welding or spot welding, or a joint process through press process such as swaging, or the like, whereby the conical roller bearing cage 1A shown in Fig. 1 is completed.

Although the connection body 3 after the joining and fixing step has welded portions and swaged portions protruded from the surface thereof, Figs. 1 and 2 do not show them.

By storing the conical rollers RA, RA, ... (refer to Fig. 1(b)) in the base body 2 prior to the joining and fixing step, the conical rollers RA, RA, ... can be easily attached to an supersized cage in particular.

In the example of the manufacturing method of the conical roller bearing cage 1A described above, the surface pressing step is performed after the folding step. Alternatively, the surface pressing step may be performed before the folding step (performed after the base body blank cutting step).

In addition, when the surface pressing step is performed after the base body blank cutting step, the inner-diameter removing step may be performed after the folding step or after the joining and fixing step.

At the surface pressing step described above, the contact surfaces with the conical rollers RA are surface-pressed by a final surface press amount. Alternatively, after the base body blank cutting step or the folding step, a rough surface pressing step may be performed to apply press-surface processing to the portions D, D, ... to be the column parts 5, 5, ... to form the contact surfaces with respect to the conical rollers RA by a surface press amount smaller than the final surface press amount.

In that case, after the joining and fixing step, a finished surface pressing step is performed to apply press-surface processing to the column parts 5, 5, ... to form the contact surfaces with respect to the conical rollers RA by the final surface press amount.

According to the manufacturing method including the rough surface pressing step and the finished surface pressing step as described above, the column parts 5, 5, ... are surface-pressed by the final surface press amount at the contact surfaces with the conical rollers RA at the finished surface pressing step after the joining and fixing step, which allows fine-adjustment of the dimension accuracy and thus facilitates acquisition of the predetermined dimension accuracy.

In the manufacturing method including the rough surface pressing step and the finished surface pressing step, the inner-diameter removing step is performed after the finished surface pressing step.

Alternatively, instead of the rough surface pressing step, a laser-cut inclined surface forming step may be performed to form by laser cut inclined surfaces equivalent to the inclined surfaces (surface-press surfaces) formed at the rough surface pressing step. The laser-cut inclined surface forming step may be performed after the base body blank cutting step, for example.

According to the laser-cut inclined surface forming step, the portions D to be the column parts 5 are not extended or deformed unlike the case where the rough surface pressing step is performed using a press mold.

In the case of performing the base body blank cutting step by laser cutting, the laser-cut inclined surface forming step can be performed in the course of the base body blank cutting step by using a laser application machine allowing three-dimensional processing, which makes it possible to significantly simplify the manufacturing process.

In the case described above, the base body blank 2A is fabricated as an integrated component at the base body blank cutting step, that is, the base body 2 is fabricated as an integrated component from the beginning.

Alternatively, instead of the base body blank cutting step, a base body constitutional blank cutting step may be performed to obtain a plurality of base body constitutional blanks F1, F1, ... constituting the base body 2 by cutting a steel plate such that the portions D, D, ... to be the column parts 5, 5, ... are protruded outward in the radial direction from the outer peripheral portion C1 of a plurality of fan-shaped divided plates E1, E1, ... obtained by dividing the disc-shaped member B1 having a central hole A shown in Fig. 3(a) evenly in the circumferential direction as shown in the plane view of Fig. 9(a) (evenly divided into quarters at 90° in the example of Fig. 9(a)), and that the engagement convexes 5A, 5A, ... are formed at the leading ends of the portions D, D, ... to be the column parts 5, 5, ....

The number of the base body constitutional blanks F1, F1, ... is not limited to four but only needs to be more than one.

Next, the folding step is performed on the base body constitutional blanks F1, F1, ... fabricated at the base body constitutional blank cutting step to fold the portions D, D, ... to be the column parts 5, 5, ... along the outer peripheral portion C1 of the fan-shaped divided plates E1. After that, a base body constitutional blank joining step is performed to join the fan-shaped divided plates E1, E1, ... of the base body constitutional blanks F1, F1, ... by welding or the like into the shape of the disc-shaped member B1, thereby to obtain an integrated base body constitutional blank joint body H1, as shown in the plane view of Fig. 9(b).

According to the manufacturing method including the base body constitutional blank cutting step as described above, the base body 2 is formed from the base body constitutional blank joint body H1 obtained by joining and integrating the plurality of base body constitutional blanks F1, F1, ..., which makes it possible to improve the yield of the material for the base body 2 and thus reduce material costs.

In addition, since the folding step is performed on the base body constitutional blanks F1, F1, ... formed at the base body constitutional blank cutting step, which allows size reduction of a drawing mold for use at the folding step.

In the case described above, the connection body blank 3A is fabricated as an integrated component at the connection body blank cutting step, that is, the connection body 3 is fabricated as an integrated component from the beginning.

Alternatively, instead of the connection body blank cutting step, a connection body constitutional blank cutting step may be performed to obtain a plurality of connection body constitutional blanks G, G, ... constituting the connection body 3, by dividing the annular ring part evenly in the circumferential direction as shown in the plane view of Fig. 10(a) (evenly divided into quarters at 90° in the example of Fig. 10(a)).

The number of the connection body constitutional blanks G, G, ... is not limited to four but only needs to be more than one.

Next, a connection body constitutional blank joining step is performed to join the connection body constitutional blanks G, G, ... fabricated through the connection body constitutional blank cutting step into the annular ring shape, thereby to obtain an integrated connection body constitutional blank joint body I, as shown in the plane view of Fig. 10(b). After that, an engagement concave forming step is performed on the connection body constitutional blank joint body I to form engagement concaves 6A, 6A, ... evenly in the circumferential direction for engagement with the engagement convexes 5A, 5A, ... as shown in the plane view of Fig. 10(c).

After that, the same shaping process as that shown in Fig. 8 is performed to complete the connection body 3.

According to the manufacturing method including the connection body constitutional blank cutting step as described above, the connection body 3 is formed from the connection body constitutional blank joint body I obtained by joining and integrating the plurality of connection body constitutional blanks G, G, ..., which makes it possible to improve the yield of the material for the connection body 3 and thus reduce material costs.

The manufacturing method of the present invention can be applied to not only the conical roller bearing cage 1A in the embodiment as shown in Figs. 1 and 2 but also the conical roller bearing cage 1A configured to have a cylindrical maximum outer-diameter portion as shown in the enlarged longitudinal front view of major components of Fig. 11. In Fig. 11, the same reference numerals as those in Fig. 2 denote components that are the same as or equivalent to those in Fig. 2.

The conical roller bearing cage 1A in the embodiment of Fig. 11 needs to be fold from the conical portion to form the maximum outer-diameter portion in a cylindrical shape. This folding may be performed on the base body blank 2A fabricated at the base body blank cutting step or may be performed in the course of the folding step of folding the portions D, D, ... to be the column parts 5, 5, ... along the outer peripheral portion C1 of the disc-shaped member B1.

In the conical roller bearing cage 1A in which the maximum outer-diameter portion is cylindrical as described above, the connection body 3 (large-diameter ring part 6) is an annular ring-shaped flat plate as shown in Fig. 11, which eliminates the need for the shaping step of forming the connection body 3 in a disc spring shape with a high inner-diameter portion and a low outer-diameter portion.

In the conical roller bearing cage 1A shown in Fig. 11, the lower surface inner peripheral portion of the connection body 3 (large-diameter ring part 6) as an annular ring-shaped flat plate is processed to form an inclined surface J. The inclined surface J is in surface contact with large diameter-side end surfaces of the conical rollers RA. The inclined surface J thus performs the function of guiding the rollers RA, and suppresses the progression of abrasion of corner portions of the connection body 3 (large-diameter ring part 6) that contact and slide on the large diameter-side end surfaces of the conical rollers RA or the like.

### Second embodiment

As shown in the plane view of Fig. 12(a), the enlarged perspective view of major components of Fig. 12(b), and the enlarged longitudinal front view of major components of Fig. 13, a roller bearing cage (cylindrical roller bearing cage 1B) according to a second embodiment manufactured with a method of the present invention is configured such that the pair of the small-diameter ring part 4 and large-diameter ring part 6 axially separated from each other is connected by a plurality of column parts 5, 5, ... sliding on outer peripheral surfaces of cylindrical rollers RB as rolling elements, and the plurality of pocket holes P, P, ... is evenly formed in the circumferential direction to store and hold the cylindrical rollers RB, RB, ... in the peripheral wall portion of a cylindrical surface shape in the state where the small-diameter ring part 4 is located on the lower side and the axial direction is set perpendicular.

Fig. 12(a) does not show the cylindrical rollers RB, RB, ....

The cylindrical roller bearing cage 1B according to the second embodiment manufactured with a method of the present invention is formed by the base body 2 including the small-diameter ring part 4 and the column parts 5, 5, ... with engagement convexes 5A, 5A, ... at leading ends thereof, and the connection body 3 including the large-diameter ring part 6 with square holes 6A, 6A, ... as engagement concaves for engagement with the engagement convexes 5A, 5A, ... at the leading ends of the column parts 5, 5, ....

As separate members, the base body 2 and the connection body 3 are each manufactured based on a blank obtained by cutting and processing a steel plate such as a hot-rolled steel plate (e.g., SPHD). The column parts 5, 5, ... of the base body 2 are formed by folding along the outer peripheral portion C1 of the small-diameter ring part 4 of the base body 2.

As described above, the cylindrical roller bearing cage 1B according to the second embodiment can be manufactured by the same manufacturing method as that of the conical roller bearing cage 1A according to the first embodiment, although the shaping step of forming a connection body blank 3A in a disc spring shape is not required.

### Third embodiment

As shown in the plane view of Fig. 14(a), the enlarged perspective view of major components of Fig. 14(b), and the enlarged longitudinal front view of major components of Fig. 15, a roller bearing cage (conical roller bearing cage 1A) according to a third embodiment manufactured with a method of the present invention is configured such that the pair of the small-diameter ring part 4 and large-diameter ring part 6 axially separated from each other is connected by the plurality of column parts 5, 5, ... sliding on the outer peripheral surfaces of the conical rollers RA as rolling elements, and the plurality of pocket holes P, P, ... is evenly formed in the circumferential direction to store and hold the conical rollers RA, RA, ... in the peripheral wall portion of the truncated cone side surface shape in the state where the large-diameter ring part 6 is located on the lower side and the axial direction is set perpendicular.

Fig. 14(a) does not show the conical rollers RA, RA, ....

The conical roller bearing cage 1A according to the third embodiment manufactured with a method of the present invention is formed by the base body 2 including the large-diameter ring part 6 and the column parts 5, 5, ... with engagement convexes 5A, 5A, ... at leading ends thereof, and the connection body 3 including the small-diameter ring part 4 with square holes 4A, 4A, ... as engagement concaves for engagement with the engagement convexes 5A, 5A, ... at the leading ends of the column parts 5, 5, ....

As separate members, the base body 2 and the connection body 3 are each manufactured based on a blank obtained by cutting and processing a steel plate such as a hot-rolled steel plate (e.g., SPHD). The column parts 5, 5, ... of the base body 2 are formed by folding along an inner peripheral portion C2 of the large-diameter ring part 6 of the base body 2.

Next, a manufacturing method of the present invention of the conical roller bearing cage 1A according to the third embodiment will be described in detail.

First, processing of the base body 2 will be described.

### (Base body blank cutting step)

As shown in the plane view of Fig. 16(a) and the enlarged plane view of major components of Fig. 16(b), a base body blank cutting step is performed to obtain a base body blank 2A by cutting a steel plate through laser cutting such that portions D, D, ... to be the column parts 5, 5, ... are protruded inward in the radial direction from the inner peripheral portion C2 of an annular ring-shaped member B2, and the engagement convexes 5A, 5A, ... are formed at the leading ends of the portions D, D, ... to be the column parts 5, 5, ....

### (Surface pressing step)

Next, a surface pressing step is performed on the base body blank 2A to surface-press the folded portions D, D to be the column parts 5, 5, ... so as to form contact surfaces with the conical rollers RA, and finish the contact surfaces as predetermined inclined surfaces (surface-press surfaces) 7, as shown in the plane view of Fig. 17(a) and the enlarged perspective view of major components of Fig. 17(b).

### (Folding step)

Next, a folding step is performed on the base body blank 2A shown in Fig. 17 to fold the portions D, D, ... to be the column parts 5, 5, ... in the shape of a truncated cone side surface using a drawing mold, along the inner peripheral portion C2 of the annular ring-shaped member B2, as shown in the plane view of Fig. 18(a) and the enlarged perspective view of major components of Fig. 18(b).

Next, processing of the connection body 3 will be described.

### (Connection body blank cutting step)

A connection body blank cutting step is performed to obtain a connection body blank 3A by cutting a steel plate through laser cutting to form a horizontal annular ring part extending in the radial direction and having the square holes 4A, 4A, ... formed evenly in the circumferential direction as engagement concaves for engagement with the engagement convexes 5A, 5A, ..., as shown in the plane view of Fig. 19(a) and the enlarged plane view of major components of Fig. 19(b).

### (Shaping step)

Next, a shaping step is performed to shape the connection body blank 3A by a press process or roll process into a disc-spring shape high at an inner-diameter portion and low at an outer-diameter portion as shown in the enlarged plane view of major components of Fig. 20(a) and the enlarged perspective view of major components of Fig. 20(b) so as to be orthogonal to the column parts 5, 5, ... of the base body 2, thereby to obtain the connection body 3.

### (Joining and fixing step)

Next, a joining and fixing step is performed to, while the engagement convexes 5A, 5A, ... of the base body 2 shown in Fig. 18 including the large-diameter ring part 6 and the column parts 5, 5, ... formed through the base body blank cutting step, the surface pressing step, and the folding step are engaged with the engagement concaves 4A, 4A, ... of the connection body 3 including the small-diameter ring part 4 shown in Fig. 20 formed through the connection body blank cutting step and the shaping step, join and fix together the base body 2 and the connection body 3 by a welding process such as laser welding or spot welding, or a joint process through press process such as swaging or the like, whereby the conical roller bearing cage 1A shown in Fig. 14 is completed.

Although the connection body 3 after the joining and fixing step has welded portions and swaged portions protruded from the surface thereof, Figs. 14 and 15 do not show them.

In the example of the manufacturing method of the conical roller bearing cage 1A described above, the surface pressing step is performed after the base body blank cutting step. Alternatively, the surface pressing step may be performed after the folding step.

The third embodiment may be a manufacturing method including the same rough surface pressing step and finished surface pressing step as those in the first embodiment. Alternatively, in the third embodiment, instead of the rough surface pressing step, a laser-cut inclined surface forming step may be performed to form by laser cut inclined surfaces equivalent to the inclined surfaces (surface-press surfaces) formed at the rough surface pressing step.

In the case described above, the base body blank 2A is fabricated as an integrated component at the base body blank cutting step, that is, the base body 2 is fabricated as an integrated component from the beginning.

Alternatively, instead of the base body blank cutting step, a base body constitutional blank cutting step may be performed to obtain a plurality of base body constitutional blanks F2, F2, ... constituting the base body 2 by cutting a steel plate such that the portions D, D, ... to be the column parts 5, 5, ... are protruded inward in the radial direction from the inner peripheral portion C2 of a plurality of arc-shaped divided plates E2, E2, ... obtained by dividing the annular ring-shaped member B2 shown in Fig. 16(a) evenly in the circumferential direction as shown in the plane view of Fig. 21(a) (evenly divided into quarters at 90° in the example of Fig. 21(a)), and that the engagement convexes 5A, 5A, ... are formed at the leading ends of the portions D, D, ... to be the column parts 5, 5, ....

The number of the base body constitutional blanks F2, F2, ... is not limited to four but only needs to be more than one.

Next, the folding step is performed on the base body constitutional blanks F2, F2, ... fabricated at the base body constitutional blank cutting step to fold the portions D, D, ... to be the column parts 5, 5, ... along the inner peripheral portion C2 of the arc-shaped divided plates E2. After that, a base body constitutional blank joining step is performed to join the arc-shaped divided plates E2, E2, ... of the base body constitutional blanks F2, F2, ... by welding or the like into the annual ring-shaped member B2, thereby to obtain an integrated base body constitutional blank joint body H2, as shown in the plane view of Fig. 21(b).

According to the manufacturing method including the base body constitutional blank cutting step as described above, the base body 2 is formed from the base body constitutional blank joint body H2 obtained by joining and integrating the plurality of base body constitutional blanks F2, F2, ..., which makes it possible to improve the yield of the material for the base body 2 and thus reduce material costs.

In addition, since the folding step is performed on the base body constitutional blanks F2, F2, ... formed at the base body constitutional blank cutting step, which allows size reduction of the drawing mold for use at the folding step.

In the third embodiment, the connection body 3 may also be manufactured by a manufacturing method including a connection body constitutional blank cutting step as shown in Fig. 10 of the first embodiment.

### Fourth embodiment

As shown in the plane view of Fig. 22(a), the enlarged perspective view of major components of Fig. 22(b), and the enlarged longitudinal front view of major components of Fig. 23, a roller bearing cage (cylindrical roller bearing cage 1B) according to a fourth embodiment manufactured with a method of the present invention is configured such that the pair of the small-diameter ring part 4 and large-diameter ring part 6 axially separated from each other is connected by a plurality of column parts 5, 5, ... sliding on outer peripheral surfaces of cylindrical rollers RB as rolling elements, and the plurality of pocket holes P, P, ... is evenly formed in the circumferential direction to store and hold the cylindrical rollers RB, RB, ... in the peripheral wall portion of a cylindrical surface shape in the state where the large-diameter ring part 6 is located on the lower side and the axial direction is set perpendicular.

Fig. 22(a) does not show the cylindrical rollers RB, RB, ....

The cylindrical roller bearing cage 1B according to the fourth embodiment manufactured with a method of the present invention is formed by the base body 2 including the large-diameter ring part 6 and the column parts 5, 5, ... with engagement convexes 5A, 5A, ... at leading ends thereof, and the connection body 3 including the small-diameter ring part 4 with square holes 4A, 4A, ... as engagement concaves for engagement with the engagement convexes 5A, 5A, ... at the leading ends of the column parts 5, 5, ....

As separate members, the base body 2 and the connection body 3 are each manufactured based on a blank obtained by cutting and processing a steel plate such as a hot-rolled steel plate (e.g., SPHD). The column parts 5, 5, ... of the base body 2 are formed by folding along the inner peripheral portion C2 of the large-diameter ring part 6 of the base body 2.

As described above, the cylindrical roller bearing cage 1B according to the fourth embodiment can be manufactured by the same manufacturing method as that of the conical roller bearing cage 1A according to the third embodiment, although the shaping step of forming a connection body blank 3A in a disc spring shape is not required.

The foregoing first and third embodiments are intended for the conical roller bearing cage 1A. In the configuration as described above in which: the base body 2 including one 4 (6) of pairs of ring parts 4 and 6 and the column parts 5, 5, ... with the engagement convexes 5A, 5A, ... at the leading ends thereof and the connection body 3 including the other 6 (4) of the ring parts with the engagement concaves 6A, 6A (4A, 4A), ... for engagement with the engagement convexes 5A, 5A, ... are manufactured as separate members based on the blanks 2A and 3A each formed by cutting steel plates; the column parts 5, 5, ... of the base body 2 are formed by folding along the outer peripheral portion C1 of the ring part 4 of the base body 2 (first embodiment) or along the inner peripheral portion C2 of the ring part 6 of the base body 2 (third embodiment); and the base body 2 and the connection body 3 are joined and fixed to each other while the engagement convexes 5A, 5A, ... of the base body 2 are engaged with the engagement concaves 6A, 6A (4A, 4A), ... of the connection body 3, the inclined surfaces (surface-press surfaces) of the column parts 5, 5, ... can be formed so as to be suited to barrel-shaped rollers (spherical rollers) as rolling elements, which is applicable to spherical roller bearing cages.

According to the foregoing roller bearing cages and manufacturing method of the same, the base body 2 and the connection body 3 as separate members are assembled into a cage, and thus the materials for and shapes of the base body 2 and the connection body 3 can be easily changed, which facilitates acquisition of desired strength and rigidity.

In addition, the base body 2 and the connection body 3 are manufactured based on their respective blanks 2A and 3A obtained by cutting and processing steel plates through laser-cutting or the like, which eliminates the need for a metal mold for punching pocket holes at manufacture of supersized cages and facilitates assurance of shape accuracy.

Further, the cage is manufactured by a combination of a cutting process of blanks by laser cutting or the like and a press process of the blanks, which allows easy processing and reduces mold costs in particular at manufacture of supersized cages that are small in production volume.

Furthermore, since the column parts 5, 5, ... of the base body 2 are formed by folding along the outer peripheral portion C1 of the ring part 4 of the base body 2 or are formed by folding along the inner peripheral portion C2 of the ring part 6 of the base body 2, no erected portions are formed between the column parts 5, 5 of the base body 2 and thus the pocket holes P can be made long. This makes it possible to extend the entire length of the rollers and increase the load capacity of the roller bearing.

In addition, when the column parts 5, 5, ... of the base body 2 are formed by folding along the inner peripheral portion C2 of the ring part 6 of the base body 2, the base body blank 2A formed by cutting a steel plate is smaller in size than that with the column parts 5, 5, ... by folding along the outer peripheral portion C1 of the ring part 4 of the base body 2, which makes it possible to increase the yield of the material and thus reduce material costs.

Further, when at least either the base body 2 or the connection body 3 is formed from a joint body in which a plurality of divisions evenly divided in the circumferential direction is joined and integrated, it is possible to increase the yield of the material and thus reduce material costs.

Furthermore, at the conical roller bearing cage 1A or the spherical roller bearing cage, by forming the ring part 6 (4) of the connection body 3 in a disc spring shape so as to be orthogonal to the column parts 5, 5, ... of the base body 2, the ring part 6 (4) of the connection body 3 enters into surface contact with the end surfaces of the rollers, which makes it possible to suppress the progress of abrasion.

### Reference Signs List

- A: Central hole
- B1: Disc-shaped member
- B2: Annular ring-shaped member
- C1: Outer peripheral portion
- C2: Inner peripheral portion
- D: Portion to be column part
- E1: Fan-shaped divided plate
- E2: Arc-shaped divided plate
- F1, F2: Base body constitutional blank
- G: Connection body constitutional blank
- H1, H2: Base body constitutional blank joint body
- I: Connection body constitutional blank joint body
- J: Inclined surface
- P: Pocket hole
- RA: Conical roller (rolling element)
- RB: Cylindrical roller (rolling element)
- 1A: Conical roller bearing cage
- 1B: Cylindrical roller bearing cage
- 2: Base body
- 2A: Base body blank
- 3: Connection body
- 3A: Connection body blank
- 4: Small-diameter ring part
- 4A: Square hole (engagement concave)
- 5: Column part
- 5A: Engagement convex
- 6: Large-diameter ring part
- 6A: Square hole (engagement concave)
- 7: Inclined surface (surface-press surface)

## Claims

1. A manufacturing method of a roller bearing cage (1A) having a diameter of 1 to 3 m, the cage being configured such that a pair of ring parts (4, 6) axially separated is connected by a plurality of column parts (5) sliding on an outer peripheral surface of a roller as a rolling element, and a plurality of pocket holes (P) is evenly formed in a circumferential direction to store and hold the roller at a peripheral wall portion, wherein the manufacturing method comprises:
a base body blank cutting step of cutting a steel plate having a thickness of 8 to 16 mm so as to protrude portions (D) to be the column parts (5) outward in a radial direction from an outer peripheral portion (C1) of a disc-shaped member (B1) with a central hole (A) and form engagement convexes (5A) at leading ends of the portions to be the column parts, thereby to obtain a base body blank (2A); a folding step of folding the portions (D) to be the column parts in the base body blank (2A) along the outer peripheral portion (C1) of the disc-shaped member;
a connection body blank cutting step of cutting a steel plate having a thickness of 8 to 16 mm so as to form engagement concaves (6A) evenly in the circumferential direction in an annular ring part for engagement with the engagement convexes, thereby to obtain a connection body blank;
a joining and fixing step of joining and fixing the base body (2) and the connection body (3) while the engagement convexes (5A) of the base body (2) formed from the base body blank are engaged with the engagement concaves (6A) of the connection body (3) formed from the connection body blank;
a surface pressing step of surface-pressing the portions (D) to be the column parts (5) to form and finish contact surfaces with respect to the roller as predetermined inclined surfaces (7), the surface pressing step being performed after the base body blank cutting step or the folding step; and
an inner-diameter removing step of removing an excessive thick portion of an inner-diameter portion of the disc-shaped member (B1) to meet a desired inner diameter, the inner-diameter removing step being performed after the folding step in the case where the surface pressing step is performed after the base body blank cutting step, or being performed after the surface pressing step in the case where the surface pressing step is performed after the folding step, or being performed after the joining and fixing step.

2. A manufacturing method of a roller bearing cage having a diameter of 1 to 3 m, the cage being configured such that a pair of ring parts (4, 6) axially separated is connected by a plurality of column parts (5) sliding on an outer peripheral surface of a roller as a rolling element, and a plurality of pocket holes (P) is evenly formed in a circumferential direction to store and hold the roller at a peripheral wall portion, wherein the manufacturing method comprises:
a base body constitutional blank cutting step of cutting a steel plate having a thickness of 8 to 16 mm so as to protrude the portions (D) to be the column parts (5) outward in a radial direction from an outer peripheral portion of a plurality of fan-shaped divided plates (E1) obtained by dividing a disc-shaped member having a central hole (A) evenly in the circumferential direction, and form engagement convexes (5A) at leading ends of the portions (D) to be the column parts, thereby to obtain a plurality of base body constitutional blanks (F1) constituting a base body;
a folding step of folding the portions (D) to be the column parts in the base body constitutional blanks along the outer peripheral portion (C1) of the fan-shaped divided plates;
a base body constitutional blank joining step of joining the fan-shaped divided plates (E1) in the plurality of the base body constitutional blanks (F1) with the folded portions to be the column parts into the shape of the disc-shaped member (B1), thereby to obtain an integrated base body constitutional blank joint body (H1);
a connection body constitutional blank cutting step of cutting a steel plate having a thickness of 8 to 16 mm so as to divide an annular ring part evenly in the circumferential direction, thereby to obtain a plurality of connection body constitutional blanks (G) constituting a connection body;
a connection body constitutional blank joining step of joining the plurality of the connection body constitutional blanks (G) into an annular ring shape, thereby to obtain an integrated connection body constitutional blank joint body (I); an engagement concave forming step of forming engagement concaves (6A) evenly in the circumferential direction in the connection body constitutional blank joint body for engagement with the engagement convexes;
a joining and fixing step of joining and fixing the base body (2) and the connection body (3) while the engagement convexes (5A) of the base body formed from the base body constitutional blank joint body (H1) are engaged with the engagement concaves (6A) of the connection body formed from the connection body constitutional blank joint body (I); a surface pressing step of surface-pressing the portions (D) to be the column parts (5) to form and finish contact surfaces with respect to the roller as predetermined inclined surfaces (7), the surface pressing step being performed after the base body constitutional blank cutting step or the folding step; and
an inner-diameter removing step of removing an excessive thick portion of an inner-diameter portion of the disc-shaped member (B1) to meet a desired inner diameter, the inner-diameter removing step being performed after the folding step in the case where the surface pressing step is performed after the base body constitutional blank cutting step, or being performed after the surface pressing step in the case where the surface pressing step is performed after the folding step, or being performed after the joining and fixing step.

3. A manufacturing method of a roller bearing cage having a diameter of 1 to 3 m, the cage being configured such that a pair of ring parts (4, 6) axially separated is connected by a plurality of column parts (5) sliding on an outer peripheral surface of a roller as a rolling element, and a plurality of pocket holes (P) is evenly formed in a circumferential direction to store and hold the roller at a peripheral wall portion, wherein the manufacturing method comprises:
a base body blank cutting step of cutting a steel plate having a thickness of 8 to 16 mm so as to protrude portions (D) to be the column parts outward in a radial direction from an outer peripheral portion (C1) of a disc-shaped member (B1) with a central hole (A) and form engagement convexes (5A) at leading ends of the portions to be the column parts, thereby to obtain a base body blank;
a folding step of folding the portions (D) to be the column parts in the base body blank along the outer peripheral portion (C1) of the disc-shaped member;
a connection body blank cutting step of cutting a steel plate having a thickness of 8 to 16 mm so as to form engagement concaves (6A) evenly in the circumferential direction in an annular ring part for engagement with the engagement convexes, thereby to obtain a connection body blank;
a joining and fixing step of joining and fixing the base body (2) and the connection body (3) while the engagement convexes (5A) of the base body formed from the base body blank are engaged with the engagement concaves (6A) of the connection body formed from the connection body blank;
a rough surface pressing step of surface-pressing the portions (D) to be the column parts to form the contact surfaces with respect to the roller by a surface press amount smaller than a final surface press amount, the rough surface pressing step being performed after the base body blank cutting step or the folding step, or a laser-cut inclined surface forming step of forming by laser cut inclined surfaces equivalent to the inclined surfaces formed at the rough surface pressing step, the laser-cut inclined surface forming step being performed in the course of the base body blank cutting step or after the base body blank cutting step;
a finished surface pressing step of surface-pressing the column parts (5) to form the contact surfaces with respect to the roller by the final surface press amount, the finished surface pressing step being performed after the joining and fixing step; and
an inner-diameter removing step of removing an excessive thick portion of an inner-diameter portion of the disc-shaped member (B1) with the central hole in the base body to meet a desired inner diameter.

4. A manufacturing method of a roller bearing cage having a diameter of 1 to 3 m, the cage being configured such that a pair of ring parts (4, 6) axially separated is connected by a plurality of column parts (5) sliding on an outer peripheral surface of a roller as a rolling element, and a plurality of pocket holes (P) is evenly formed in a circumferential direction to store and hold the roller at a peripheral wall portion, wherein the manufacturing method comprises:
a base body blank cutting step of cutting a steel plate having a thickness of 8 to 16 mm so as to protrude portions (D) to be the column parts inward in a radial direction from an inner peripheral portion (C2) of an annular ring-shaped member (B2) and form engagement convexes (5A) at leading ends of the portions to be the column parts, thereby to obtain a base body blank;
a folding step of folding the portions (D) to be the column parts in the base body blank along the inner peripheral portion of the annular ring-shaped member;
a connection body blank cutting step of cutting a steel plate having a thickness of 8 to 16 mm so as to form engagement concaves (4A) evenly in the circumferential direction in an annular ring part for engagement with the engagement convexes, thereby to obtain a connection body blank;
a joining and fixing step of joining and fixing the base body (2) and the connection body (3) while the engagement convexes of the base body formed from the base body blank (2A) are engaged with the engagement concaves of the connection body formed from the connection body blank (3A); and
a surface pressing step of surface-pressing the portions (D) to be the column parts to form and finish contact surfaces with respect to the roller as predetermined inclined surfaces (7), the surface pressing step being performed after the base body blank cutting step or the folding step.

5. A manufacturing method of a roller bearing cage having a diameter of 1 to 3 m, the cage being configured such that a pair of ring parts (4, 6) axially separated is connected by a plurality of column parts (5) sliding on an outer peripheral surface of a roller as a rolling element, and a plurality of pocket holes (P) is evenly formed in a circumferential direction to store and hold the roller at a peripheral wall portion, wherein the manufacturing method comprises:
a base body constitutional blank cutting step of cutting a steel plate having a thickness of 8 to 16 mm so as to protrude the portions (D) to be the column parts inward in a radial direction from an inner peripheral portion (C2) of a plurality of arc-shaped divided plates (E2) obtained by dividing an annular ring-shaped member evenly in the circumferential direction, and form engagement convexes (5A) at leading ends of the portions (D) to be the column parts, thereby to obtain a plurality of base body constitutional blanks (F2) constituting a base body;
a folding step of folding the portions (D) to be the column parts in the base body constitutional blanks along the inner peripheral portion (C2) of the arc-shaped divided plates;
a base body constitutional blank joining step of joining the arc-shaped divided plates (E2) in the plurality of the base body constitutional blanks (F2) with the folded portions (D) to be the column parts into the shape of the annular ring-shaped member (B2), thereby to obtain an integrated base body constitutional blank joint body (H2); a connection body constitutional blank cutting step of cutting a steel plate having a thickness of 8 to 16 mm so as to divide an annular ring part evenly in the circumferential direction, thereby to obtain a plurality of connection body constitutional blanks (G) constituting a connection body;
a connection body constitutional blank joining step of joining the plurality of connection body constitutional blanks (G) into the annular ring shape, thereby to obtain an integrated connection body constitutional blank joint body (I); an engagement concave forming step of forming engagement concaves (4A) evenly in the circumferential direction in the connection body constitutional blank joint body for engagement with the engagement convexes;
a joining and fixing step of joining and fixing the base body (2) and the connection body (3) while the engagement convexes (5A) of the base body formed from the base body constitutional blank joint body (H2) are engaged with the engagement concaves (4A) of the connection body formed from the connection body constitutional blank joint body; and
a surface pressing step of surface-pressing the portions (D) to be the column parts (5) to form and finish contact surfaces with respect to the roller as predetermined inclined surfaces (7), the surface pressing step being performed after the base body constitutional blank cutting step or the folding step.

6. A manufacturing method of a roller bearing cage having a diameter of 1 to 3 m, the cage being configured such that a pair of ring parts (4, 6) axially separated is connected by a plurality of column parts (5) sliding on an outer peripheral surface of a roller as a rolling element, and a plurality of pocket holes (P) is evenly formed in a circumferential direction to store and hold the roller at a peripheral wall portion, wherein the manufacturing method comprises:
a base body blank cutting step of cutting a steel plate having a thickness of 8 to 16 mm so as to protrude portions (D) to be the column parts inward in a radial direction from an inner peripheral portion (C2) of an annular ring-shaped member (B2) and form engagement convexes (5A) at leading ends of the portions to be the column parts, thereby to obtain a base body blank;
a folding step of folding the portions (D) to be the column parts in the base body blank (2A) along the inner peripheral portion of the annular ring-shaped member;
a connection body blank cutting step of cutting a steel plate having a thickness of 8 to 16 mm so as to form engagement concaves (4A) evenly in the circumferential direction in an annular ring part for engagement with the engagement convexes, thereby to obtain a connection body blank;
a joining and fixing step of joining and fixing the base body (2) and the connection body (3) while the engagement convexes (5A) of the base body (2) formed from the base body blank are engaged with the engagement concaves (4A) of the connection body (3) formed from the connection body blank;
a rough surface pressing step of surface-pressing the portions (D) to be the column parts to form contact surfaces with respect to the roller by a surface press amount smaller than a final surface press amount, the rough surface pressing step being performed after the base body blank cutting step or the folding step, or a laser-cut inclined surface forming step of forming by laser cut inclined surfaces equivalent to the inclined surfaces formed at the rough surface pressing step, the laser-cut inclined surface forming step being performed in the course of the base body blank cutting step or after the base body blank cutting step; and
a finished surface pressing step of surface-pressing the column parts (5) to form the contact surfaces with respect to the roller by the final surface press amount, the finished surface pressing step being performed after the joining and fixing step.

7. The manufacturing method of a roller bearing cage according to any one of Claims 1 to 6, wherein
the roller is a conical roller (RA) or a spherical roller, and the manufacturing method comprises a shaping step of forming the connection body blank (3A) or the connection body constitutional blank joint body (I) in a disc-spring shape so as to be orthogonal to the column parts (7) of the base body.

## Patentansprüche

1. Verfahren zum Herstellen eines Rollenlagerkäfigs (1A) mit einem Durchmesser von 1 bis 3 m, wobei der Käfig derart konfiguriert ist, dass ein Paar Ringelemente (4, 6), die axial getrennt sind, durch mehrere Säulenelemente (5) verbunden sind, die jeweils auf einer Außenumfangsfläche einer Rolle als ein Rollelement gleiten, und wobei mehrere Aufnahmelöcher (P) zum Aufnehmen und Halten der Rolle an einem Umfangswandabschnitt in einer Umfangsrichtung gleichmäßig ausgebildet sind, wobei das Verfahren aufweist:
einen Basiskörperrohlingschneideschritt zum Schneiden einer Stahlplatte mit einer Dicke von 8 bis 16 mm derart, dass Abschnitte (D), die die Säulenelemente (5) bilden sollen, in einer radialen Richtung von einem Außenumfangsabschnitt (C1) eines scheibenförmigen Elements (B1) mit einem Mittelloch (A) nach außen hervorstehen und konvexe Eingriffsabschnitte (5A) an vorderen Enden der Abschnitte bilden, die die Säulenelemente bilden sollen, wodurch ein Basiskörperrohling (2A) erhalten wird;
einen Biegeschritt zum Umbiegen der Abschnitte (D), die die Säulenelemente des Basiskörperrohlings (2A) bilden sollen, entlang des Außenumfangsabschnitts (C1) des scheibenförmigen Elements;
einen Verbindungskörperrohlingschneideschritt zum Schneiden einer Stahlplatte mit einer Dicke von 8 bis 16 mm derart, dass in der Umfangsrichtung gleichmäßig konkave Eingriffsabschnitte (6A) in einem ringförmigen Element für einen Eingriff mit den konvexen Eingriffsabschnitten ausgebildet werden, um einen Verbindungskörperrohling zu erhalten;
einen Zusammenfügungs- und Fixierschritt zum Zusammenfügen und Fixieren des Basiskörpers (2) und des Verbindungskörpers (3), während die konvexen Eingriffsabschnitte (5A) des vom Basiskörperrohling ausgebildeten Basiskörpers (2) mit den konkaven Eingriffsabschnitten (6A) des vom Verbindungskörperrohling ausgebildeten Verbindungskörpers (3) in Eingriff gebracht werden;
einen Flächenpressschritt zum Flächenpressen der Abschnitte (D), die die säulenförmigen Teile (5) bilden sollen, zum Ausbilden und Fertigstellen von Kontaktflächen bezüglich der Rolle als vorgegebene geneigte Flächen (7), wobei der Flächenpressschritt nach dem Basiskörperschneideschritt oder nach dem Biegeschritt ausgeführt wird; und
einen Innendurchmesserentfernungsschritt zum Entfernen eines übermäßig dicken Abschnitts eines Innendurchmesserabschnitts des scheibenförmigen Elements (B1), um einen Soll-Innendurchmesser zu erhalten, wobei der Innendurchmesserentfernungsschritt nach dem Biegeschritt ausgeführt wird, falls der Flächenpressschritt nach dem Basiskörperrohlingschneideschritt ausgeführt wird, oder nach dem Flächenpressschritt ausgeführt wird, falls der Flächenpressschritt nach dem Biegeschritt ausgeführt wird, oder nach dem Zusammenfügungs- und Fixierschritt ausgeführt wird.

2. Verfahren zum Herstellen eines Rollenlagerkäfigs mit einem Durchmesser von 1 bis 3 m, wobei der Käfig derart konfiguriert ist, dass ein Paar Ringelemente (4, 6), die axial getrennt sind, durch mehrere Säulenelemente (5) verbunden sind, die auf einer Außenumfangsfläche einer Rolle als ein Rollelement gleiten, und wobei mehrere Aufnahmelöcher (P) zum Aufnehmen und Halten der Rolle an einem Umfangswandabschnitt in einer Umfangsrichtung gleichmäßig ausgebildet sind, wobei das Verfahren aufweist:
einen Schritt zum Schneiden von einen Basiskörper bildenden Rohlingen zum Schneiden einer Stahlplatte mit einer Dicke von 8 bis 16 mm derart, dass die Abschnitte (D), die die Säulenelemente (5) bilden sollen, in einer radialen Richtung von einem Außenumfangsabschnitt mehrerer fächerförmiger geteilter Platten (E1) nach außen hervorstehen, die durch gleichmäßiges Teilen eines scheibenförmigen Elements mit einem Mittelloch (A) in der Umfangsrichtung erhalten werden und konvexe Eingriffsabschnitte (5A) an vorderen Enden der Abschnitte (D) bilden, die die Säulenelemente bilden sollen, um mehrere einen Basiskörper bildende Rohlinge (F1) zu erhalten;
einen Biegeschritt zum Biegen der Abschnitte (D), die die Säulenelemente der einen Basiskörper bildenden Rohlinge bilden sollen, entlang des Außenumfangsabschnitts (C1) der fächerförmigen geteilten Platten;
einen Schritt zum Zusammenfügen der einen Basiskörper bildenden Rohlinge zum Zusammenfügen der fächerförmigen geteilten Platten (E1) der mehreren einen Basiskörper bildenden Rohlinge (F1) mit den gebogenen Abschnitten, die die Säulenelemente bilden sollen, in die Form des scheibenförmigen Elements (B1), um einen einen integrierten Basiskörper bildenden zusammengefügten Rohlingkörper (H1) zu erhalten;
einen Schritt zum Schneiden von einen Verbindungskörper bildenden Rohlingen zum Schneiden einer Stahlplatte mit einer Dicke von 8 bis 16 mm derart, dass ein ringförmiges Element in der Umfangsrichtung gleichmäßig geteilt wird, um mehrere einen Verbindungskörper bildende Rohlinge (G) zu erhalten;
einen Schritt zum Zusammenfügen der einen Verbindungskörper bildenden Rohlinge zum Zusammenfügen der mehreren einen Verbindungskörper bildenden Rohlinge (G) in einer Ringform, um einen einen integrierten Verbindungskörper bildenden zusammengesetzten Rohlingkörper (I) zu erhalten;
einen Schritt zum Ausbilden konkaver Eingriffsabschnitte zum gleichmäßigen Ausbilden konkaver Eingriffsabschnitte (6A) in der Umfangsrichtung des den Verbindungskörper bildenden zusammengefügten Rohlingkörpers für einen Eingriff mit den konvexen Eingriffsabschnitten;
einen Zusammenfügungs- und Fixierschritt zum Zusammenfügen und Fixieren des Basiskörpers (2) und des Verbindungskörpers (3), während die konvexen Eingriffsabschnitte (5A) des von dem den Basiskörper bildenden zusammengefügten Rohlingkörper (H1) ausgebildeten Basiskörpers mit den konkaven Eingriffsabschnitten (6A) des von dem den Verbindungskörper bildenden zusammengesetzten Rohlingkörper (I) ausgebildeten Verbindungskörpers in Eingriff gebracht werden;
einen Flächenpressschritt zum Flächenpressen der Abschnitte (D), die die Säulenelemente (5) bilden sollen, zum Ausbilden und Fertigstellen von Kontaktflächen bezüglich der Rolle als vorgegebene geneigte Flächen (7), wobei der Flächenpressschritt nach dem Schritt zum Schneiden eines einen Basiskörper bildenden Rohlings oder nach dem Biegeschritt ausgeführt wird; und
einen Innendurchmesserentfernungsschritt zum Entfernen eines übermäßig dicken Abschnitts eines Innendurchmesserabschnitts des scheibenförmigen Elements (B1), um einen Soll-Innendurchmesser zu erhalten, wobei der Innendurchmesserentfernungsschritt nach dem Biegeschritt ausgeführt wird, falls der Flächenpressschritt nach dem Schritt zum Schneiden eines einen Basiskörper bildenden Rohlings ausgeführt wird, oder nach dem Flächenpressschritt ausgeführt wird, falls der Flächenpressschritt nach dem Biegeschritt ausgeführt wird, oder nach dem Zusammenfügungs- und Fixierschritt ausgeführt wird.

3. Verfahren zum Herstellen eines Rollenlagerkäfigs mit einem Durchmesser von 1 bis 3 m, wobei der Käfig derart konfiguriert ist, dass ein Paar Ringelemente (4, 6), die axial getrennt sind, durch mehrere Säulenelemente (5) verbunden sind, die auf einer Außenumfangsfläche einer Rolle als ein Rollelement gleiten, und wobei mehrere Aufnahmelöcher (P) zum Aufnehmen und Halten der Rolle an einem Umfangswandabschnitt in einer Umfangsrichtung gleichmäßig ausgebildet sind, wobei das Verfahren aufweist:
einen Basiskörperrohlingschneideschritt zum Schneiden einer Stahlplatte mit einer Dicke von 8 bis 16 mm derart, dass Abschnitte (D), die die Säulenelemente bilden sollen, in einer radialen Richtung von einem Außenumfangsabschnitt (C1) eines scheibenförmigen Elements (B1) mit einem Mittelloch (A) nach außen hervorstehen und konvexe Eingriffsabschnitte (5A) an vorderen Enden der Abschnitte bilden, die die Säulenelemente bilden sollen, um einen Basiskörperrohling zu erhalten;
einen Biegeschritt zum Biegen der Abschnitte (D), die die Säulenelemente des Basiskörperrohlings bilden sollen, entlang des Außenumfangsabschnitts (C1) des scheibenförmigen Elements;
einen Verbindungskörperrohlingschneideschritt zum Schneiden einer Stahlplatte mit einer Dicke von 8 bis 16 mm derart, dass in der Umfangsrichtung gleichmäßig konkave Eingriffsabschnitte (6A) in einem ringförmigen Element für einen Eingriff mit den konkaven Eingriffsabschnitten ausgebildet werden, um einen Verbindungskörperrohling zu erhalten;
einen Zusammenfügungs- und Fixierschritt zum Zusammenfügen und Fixieren des Basiskörpers (2) und des Verbindungskörpers (3), während die konvexen Eingriffsabschnitte (5A) des vom Basiskörperrohling ausgebildeten Basiskörpers mit den konkaven Eingriffsabschnitten (6A) des vom Verbindungskörperrohling ausgebildeten Verbindungskörpers in Eingriff gebracht werden;
einen groben Flächenpressschritt zum Flächenpressen der Abschnitte (D), die die säulenförmigen Elemente bilden sollen, zum Ausbilden der Kontaktflächen bezüglich der Rolle gemäß einem Flächenpressmaß, das kleiner ist als ein Endflächenpressmaß, wobei der grobe Flächenpressschritt nach dem Basiskörperrohlingschneideschritt oder nach dem Biegeschritt ausgeführt wird, oder einen Schritt zum Ausbilden geneigter Flächen durch Laserschneiden, die den im groben Flächenpressschnitt ausgebildeten geneigten Flächen entsprechen, wobei der Schritt zum Ausbilden geneigter Flächen durch Laserschneiden im Verlauf des Basiskörperrohlingschneideschritts oder nach dem Basiskörperrohlingschneideschritt ausgeführt wird;
einen Endflächenpressschritt zum Flächenpressen der Säulenelemente (5) zum Ausbilden der Kontaktflächen bezüglich der Rolle gemäß dem Endflächenpressmaß, wobei der Endflächenpressschritt nach dem Zusammenfügungs- und Fixierschritt ausgeführt wird; und
einen Innendurchmesserentfernungsschritt zum Entfernen eines übermäßig dicken Abschnitts eines Innendurchmesserabschnitts des scheibenförmigen Elements (B1) mit dem Mittelloch im Basiskörper, um einen Soll-Innendurchmesser zu erhalten.

4. Verfahren zum Herstellen eines Rollenlagerkäfigs mit einem Durchmesser von 1 bis 3 m, wobei der Käfig derart konfiguriert ist, dass ein Paar Ringelemente (4, 6), die axial getrennt sind, durch mehrere Säulenelemente (5) verbunden sind, die auf einer Außenumfangsfläche einer Rolle als ein Rollelement gleiten, und wobei mehrere Aufnahmelöcher (P) zum Aufnehmen und Halten der Rolle an einem Umfangswandabschnitt in einer Umfangsrichtung gleichmäßig ausgebildet sind, wobei das Verfahren aufweist:
einen Basiskörperrohlingschneideschritt zum Schneiden einer Stahlplatte mit einer Dicke von 8 bis 16 mm derart, dass Abschnitte (D), die die Säulenelemente bilden sollen, von einem Innenumfangsabschnitt (C2) eines ringförmigen Elements (B2) in einer radialen Richtung nach innen hervorstehen und konvexe Eingriffsabschnitte (5A) an vorderen Enden der Abschnitte bilden, die die Säulenelemente bilden sollen, wodurch ein Basiskörperrohling erhalten wird;
einen Biegeschritt zum Biegen der Abschnitte (D), die die Säulenelemente des Basiskörperrohlings bilden sollen, entlang des Innenumfangsabschnitts des ringförmigen Elements;
einen Verbindungskörperrohlingschneideschritt zum Schneiden einer Stahlplatte mit einer Dicke von 8 bis 16 mm derart, dass in der Umfangsrichtung gleichmäßig konkave Eingriffsabschnitte (4A) in einem ringförmigen Element für einen Eingriff mit den konkaven Eingriffsabschnitten ausgebildet werden, um einen Verbindungskörperrohling zu erhalten;
einen Zusammenfügungs- und Fixierschritt zum Zusammenfügen und Fixieren des Basiskörpers (2) und des Verbindungskörpers (3), während die konvexen Eingriffsabschnitte des vom Basiskörperrohling (2A) ausgebildeten Basiskörpers mit den konkaven Eingriffsabschnitten des vom Verbindungskörperrohling (3 A) ausgebildeten Verbindungskörpers in Eingriff gebracht werden; und
einen Flächenpressschritt zum Flächenpressen der Abschnitte (D), die die Säulenelemente bilden sollen, zum Ausbilden und Fertigstellen von Kontaktflächen bezüglich der Rolle als vorgegebene geneigte Flächen (7),
wobei der Flächenpressschritt nach dem Basiskörperrohlingschneideschritt oder nach dem Biegeschritt ausgeführt wird.

5. Verfahren zum Herstellen eines Rollenlagerkäfigs mit einem Durchmesser von 1 bis 3 m, wobei der Käfig derart konfiguriert ist, dass ein Paar Ringelemente (4, 6), die axial getrennt sind, durch mehrere Säulenelemente (5) verbunden sind, die auf einer Außenumfangsfläche einer Rolle als ein Rollelement gleiten, und wobei mehrere Aufnahmelöcher (P) zum Aufnehmen und Halten der Rolle an einem Umfangswandabschnitt in einer Umfangsrichtung gleichmäßig ausgebildet sind, wobei das Verfahren aufweist:
einen Schritt zum Schneiden von einen Basiskörper bildenden Rohlingen zum Schneiden einer Stahlplatte mit einer Dicke von 8 bis 16 mm derart, dass die Abschnitte (D), die die Säulenelemente bilden sollen, von einem Innenumfangsabschnitt (C2) mehrerer bogenförmiger Teilplatten (E2), die durch gleichmäßiges Teilen eines ringförmigen Elements in der Umfangsrichtung erhalten werden, in einer radialen Richtung nach innen hervorstehen und konvexe Eingriffsabschnitte (5A) an vorderen Enden der Abschnitte bilden, die die Säulenelemente bilden sollen, um mehrere einen Basiskörper bildende Rohlinge (F2) zu erhalten;
einen Biegeschritt zum Biegen der Abschnitte (D), die die Säulenelemente in den den Basiskörper bildenden Rohlingen bilden sollen, entlang des Innenumfangsabschnitts (C2) der bogenförmigen Teilplatten;
einen Schritt zum Zusammenfügen der einen Basiskörper bildenden Rohlinge zum Zusammenfügen der bogenförmigen Teilplatten (E2) der mehreren den Basiskörper bildenden Rohlinge (F2) mit den gebogenen Abschnitten (D), die die säulenförmigen Teile bilden sollen, in die Form des ringförmigen Elements (B2), um einen einen integrierten Basiskörper bildenden zusammengesetzten Rohlingkörper (H2) zu erhalten;
einen Schritt zum Schneiden eines einen Verbindungskörper bildenden Rohlings zum Schneiden einer Stahlplatte mit einer Dicke von 8 bis 16 mm derart, dass ein ringförmiges Element in der Umfangsrichtung gleichmäßig geteilt wird, um mehrere einen Verbindungskörper bildende Rohlinge (G) zu erhalten;
einen Schritt zum Zusammenfügen der einen Verbindungskörper bildenden Rohlinge zum Zusammenfügen der mehreren einen Verbindungskörper bildenden Rohlinge (G) in eine Ringform, um einen einen integrierten Verbindungskörper bildenden zusammengesetzten Rohlingkörper (I) zu erhalten;
einen Schritt zum Ausbilden konkaver Eingriffsabschnitte zum gleichmäßigen Ausbilden konkaver Eingriffsabschnitte (4A) in der Umfangsrichtung des den Verbindungskörper bildenden zusammengesetzten Rohlingkörpers für einen Eingriff mit den konvexen Eingriffsabschnitten;
einen Zusammenfügungs- und Fixierschritt zum Zusammenfügen und Fixieren des Basiskörpers (2) und des Verbindungskörpers (3), während die konvexen Eingriffsabschnitte (5A) des Basiskörpers, der von dem den Basiskörper bildenden zusammengefügten Rohlingkörper (H2) gebildet wird, mit den konkaven Eingriffsabschnitten (4A) des Verbindungskörpers in Eingriff gebracht werden, der von dem den Verbindungskörper bildenden zusammengefügten Rohlingkörper gebildet wird; und
einen Flächenpressschritt zum Flächenpressen der Abschnitte (D), die die Säulenelemente (5) bilden sollen, zum Ausbilden und Fertigstellen von Kontaktflächen bezüglich der Rolle als vorgegebene geneigte Flächen (7),
wobei der Flächenpressschritt nach dem Schritt zum Schneiden der einen Basiskörper bildenden Rohlinge oder nach dem Biegeschritt ausgeführt wird.

6. Verfahren zum Herstellen eines Rollenlagerkäfigs mit einem Durchmesser von 1 bis 3 m, wobei der Käfig derart konfiguriert ist, dass ein Paar Ringelemente (4, 6), die axial getrennt sind, durch mehrere Säulenelemente (5) verbunden sind, die auf einer Außenumfangsfläche einer Rolle als ein Rollelement gleiten, und wobei mehrere Aufnahmelöcher (P) zum Aufnehmen und Halten der Rolle an einem Umfangswandabschnitt in einer Umfangsrichtung gleichmäßig ausgebildet sind, wobei das Verfahren aufweist:
einen Basiskörperrohlingschneideschritt zum Schneiden einer Stahlplatte mit einer Dicke von 8 bis 16 mm derart, dass Abschnitte (D), die die Säulenelemente bilden sollen, von einem Innenumfangsabschnitt (C2) eines ringförmigen Elements (B2) in einer radialen Richtung nach innen hervorstehen und konvexe Eingriffsabschnitte (5A) an vorderen Enden der Abschnitte bilden, die die Säulenelemente bilden sollen, um einen Basiskörperrohling zu erhalten;
einen Biegeschritt zum Biegen der Abschnitte (D), die die Säulenelemente des Basiskörperrohlings (2A) bilden sollen, entlang des Innenumfangsabschnitts des ringförmigen Elements;
einen Verbindungskörperrohlingschneideschritt zum Schneiden einer Stahlplatte mit einer Dicke von 8 bis 16 mm derart, dass konkave Eingriffsabschnitte (4A) in der Umfangsrichtung in einem ringförmigen Teil für einen Eingriff mit den konvexen Eingriffsabschnitten gleichmäßig ausgebildet werden, um einen Verbindungsrohlingkörper zu erhalten;
einen Zusammenfügungs- und Fixierschritt zum Zusammenfügen und Fixieren des Basiskörpers (2) und des Verbindungskörpers (3), während die konvexen Eingriffsabschnitte (5A) des vom Basiskörperrohling ausgebildeten Basiskörpers (2) mit den konkaven Eingriffsabschnitten (4A) des vom Verbindungskörperrohling ausgebildeten Verbindungskörpers (3) in Eingriff gebracht werden;
einen groben Flächenpressschritt zum Flächenpressen der Abschnitte (D), die die Säulenelemente bilden sollen, zum Ausbilden von Kontaktflächen bezüglich der Rolle gemäß einem Flächenpressmaß, das kleiner ist als ein Endflächenpressmaß, wobei der grobe Flächenpressschritt nach dem Basiskörperrohlingschneideschritt oder nach dem Biegeschritt ausgeführt wird, oder einen Schritt zum Ausbilden geneigter Flächen durch Laserschneiden, die den im groben Flächenpressschritt ausgebildeten geneigten Flächen entsprechen, wobei der Schritt zum Ausbilden geneigter Flächen durch Laserschneiden im Verlauf des Basiskörperrohlingschneideschritts oder nach dem Basiskörperrohlingschneideschritt ausgeführt wird; und
einen Endflächenpressschritt zum Flächenpressen der Säulenelemente (5) zum Ausbilden der Kontaktflächen bezüglich der Rolle gemäß dem Endflächenpressmaß, wobei der Endflächenpressschritt nach dem Zusammenfügungs- und Fixierschritt ausgeführt wird.

7. Verfahren nach einem der Ansprüche 1 bis 6, wobei
die Rolle eine kegelförmige Rolle (RA) oder eine kugelförmige Rolle ist, und
wobei das Herstellungsverfahren einen Formungsschritt zum Ausbilden des Verbindungskörperrohlings (3A) oder des einen Verbindungskörper bildenden zusammengefügten Rohlingkörpers (I) in einer Scheibenfederform derart, dass er sich orthogonal zu den Säulenelementen (5) des Basiskörpers erstreckt, aufweist.

## Revendications

1. Procédé de fabrication d'une cage de roulement à rouleaux (1A) ayant un diamètre de 1 à 3 m, la cage étant configurée de sorte qu'une paire de parties annulaires (4, 6) axialement séparées, est raccordée par une pluralité de parties de colonne (5) coulissant sur une surface périphérique externe d'un rouleau en tant qu'élément roulant, et une pluralité de trous de poche (P) est régulièrement formée dans une direction circonférentielle pour stocker et maintenir le rouleau au niveau d'une partie de paroi périphérique, dans lequel le procédé de fabrication comprend :
une étape de coupe d'ébauche de corps de base pour couper une plaque en acier ayant une épaisseur de 8 à 16 mm afin de faire faire saillie à des parties (D) destinées à être les parties de colonne (5), vers l'extérieur dans une direction radiale à partir d'une partie périphérique externe (C1) d'un élément en forme de disque (B1) avec un trou central (A) et former des parties convexes de mise en prise (5A) au niveau des extrémités d'attaque des parties destinées à être les parties de colonne, afin d'obtenir ainsi une ébauche de corps de base (2A) ;
une étape de pliage pour plier les parties (D) destinées à être les parties de colonne dans l'ébauche de corps de base (2A) le long de la partie périphérique externe (C1) de l'élément en forme de disque ;
une étape de coupe d'ébauche de corps de raccordement pour couper une plaque en acier ayant une épaisseur de 8 à 16 mm afin de former des parties concaves de mise en prise (6A) régulièrement dans la direction circonférentielle dans une partie annulaire pour la mise en prise avec les parties convexes de mise en prise, afin d'obtenir ainsi une ébauche de corps de raccordement ;
une étape d'assemblage et de fixation pour assembler et fixer le corps de base (2) et le corps de raccordement (3) alors que les parties convexes de mise en prise (5A) du corps de base (2) formé à partir de l'ébauche de corps de base sont mises en prise avec les parties concaves de mise en prise (6A) du corps de raccordement (3) formé à partir de l'ébauche de corps de raccordement ;
une étape de pression de surface pour comprimer la surface des parties (D) destinées à être les parties de colonne (5) afin de former et finir des surfaces de contact par rapport au rouleau en tant que surfaces inclinées (7) prédéterminées,
l'étape de pression de surface étant réalisée après l'étape de coupe d'ébauche de corps de base ou l'étape de pliage ; et
une étape de retrait de diamètre interne pour retirer une partie épaisse en excès d'une partie de diamètre interne de l'élément en forme de disque (B1) pour satisfaire un diamètre interne souhaité, l'étape de retrait de diamètre interne étant réalisée après l'étape de pliage, dans le cas dans lequel l'étape de pression de surface est réalisée après l'étape de coupe d'ébauche de corps de base, ou bien réalisée après l'étape de pression de surface dans le cas dans lequel l'étape de pression de surface est réalisée après l'étape de pliage, ou bien réalisée après l'étape d'assemblage et de fixation.

2. Procédé de fabrication d'une cage de roulement à rouleaux ayant un diamètre de 1 à 3 m, la cage étant configurée de sorte qu'une paire de parties annulaires (4, 6) axialement séparées, est raccordée par une pluralité de parties de colonne (5) coulissant sur une surface périphérique externe d'un rouleau en tant qu'élément roulant, et une pluralité de trous de poche (P) est régulièrement formée dans une direction circonférentielle pour stocker et maintenir le rouleau au niveau d'une partie de paroi périphérique, dans lequel le procédé de fabrication comprend :
une étape de coupe d'ébauche de constitution de corps de base pour couper une plaque en acier ayant une épaisseur de 8 à 16 mm afin de faire faire saillie aux parties (D) destinées à être les parties de colonne (5), vers l'extérieur dans une direction radiale à partir d'une partie périphérique externe d'une pluralité de plaques divisées en forme d'éventail (E1) obtenues en divisant un élément en forme de disque ayant un trou central (A) régulièrement dans la direction circonférentielle, et former des parties convexes de mise en prise (5A) au niveau des extrémités d'attaque des parties (D) destinées à être les parties de colonne, pour obtenir ainsi une pluralité d'ébauches de constitution de corps de base (F1) constituant un corps de base;
une étape de pliage pour plier les parties (D) destinées à être les parties de colonne dans les ébauches de constitution de corps de base le long de la partie périphérique externe (C1) des plaques divisées en forme d'éventail ;
une étape d'assemblage d'ébauche de constitution de corps de base pour assembler les plaques divisées en forme d'éventail (E1) dans la pluralité d'ébauches de constitution de corps de base (F1) avec les parties pliées destinées à être les parties de colonne dans la forme de l'élément en forme de disque (B1), pour obtenir ainsi un corps de joint d'ébauche de constitution de corps de base (H1) intégré ;
une étape de coupe d'ébauche de constitution de corps de raccordement pour couper une plaque en acier ayant une épaisseur de 8 à 16 mm afin de diviser une partie annulaire régulièrement dans la direction circonférentielle, pour obtenir ainsi une pluralité d'ébauches de constitution de corps de raccordement (G) constituant un corps de raccordement ;
une étape d'assemblage d'ébauche de constitution de corps de raccordement pour assembler la pluralité d'ébauches de constitution de corps de raccordement (G) en une forme annulaire, pour obtenir ainsi un corps de joint d'ébauche de constitution de corps de raccordement (I) intégré ;
une étape de formation de partie concave de mise en prise pour former des parties concaves de mise en prise (6A) régulièrement dans la direction circonférentielle dans le corps de joint d'ébauche de constitution de corps de raccordement pour se mettre en prise avec les parties convexes de mise en prise ;
une étape d'assemblage et de fixation pour assembler et fixer le corps de base (2) et le corps de raccordement (3) alors que les parties convexes de mise en prise (5A) du corps de base formé à partir du corps de joint d'ébauche de constitution de corps de base (H1) sont mises en prise avec les parties concaves de mise en prise (6A) du corps de raccordement formé à partir du corps de joint d'ébauche de constitution de corps de raccordement (I) ;
une étape de pression de surface pour presser la surface des parties (D) destinées à être les parties de colonne (5) pour former et finir des surfaces de contact par rapport au rouleau en tant que surfaces inclinées (7) prédéterminées,
l'étape de pression de surface étant réalisée après l'étape de coupe d'ébauche de constitution de corps de base ou l'étape de pliage ; et
une étape de retrait de diamètre interne pour retirer une partie épaisse en excès d'une partie de diamètre interne de l'élément en forme de disque (B1) pour satisfaire un diamètre interne souhaité, l'étape de retrait de diamètre interne étant réalisée après l'étape de pliage dans le cas dans lequel l'étape de pression de surface est réalisée après l'étape de coupe d'ébauche de constitution de corps de base, ou bien réalisée après l'étape de pression de surface dans le cas dans lequel l'étape de pression de surface est réalisée après l'étape de pliage, ou bien réalisée après l'étape d'assemblage et de fixation.

3. Procédé de fabrication d'une cage de roulement à rouleaux ayant un diamètre de 1 à 3 m, la cage étant configurée de sorte qu'une paire de parties annulaires (4, 6) axialement séparées, est raccordée par une pluralité de parties de colonne (5) coulissant sur une surface périphérique externe d'un rouleau en tant qu'élément roulant, et une pluralité de trous de poche (P) est régulièrement formée dans une direction circonférentielle pour stocker et maintenir le rouleau au niveau d'une partie de paroi périphérique, dans lequel le procédé de fabrication comprend :
une étape de coupe d'ébauche de corps de base pour couper une plaque en acier ayant une épaisseur de 8 à 16 mm afin de faire faire saillie à des parties (D) destinées à être les parties de colonne, vers l'extérieur dans une direction radiale à partir d'une partie périphérique externe (C1) d'un élément en forme de disque (B1) avec un trou central (A) et former des parties convexes de mise en prise (5A) au niveau des extrémités d'attaque des parties destinées à être les parties de colonne, pour obtenir ainsi une ébauche de corps de base;
une étape de pliage pour plier les parties (D) destinées à être les parties de colonne dans l'ébauche de corps de base le long de la partie périphérique externe (C1) de l'élément en forme de disque ;
une étape de coupe d'ébauche de corps de raccordement pour couper une plaque en acier ayant une épaisseur de 8 à 16 mm afin de former des parties concaves de mise en prise (6A) régulièrement dans la direction circonférentielle d'une partie annulaire pour la mise en prise avec les parties convexes de mise en prise, pour obtenir ainsi une ébauche de corps de raccordement ;
une étape d'assemblage et de fixation pour assembler et fixer le corps de base (2) et le corps de raccordement (3) alors que les parties convexes de mise en prise (5A) du corps de base formé à partir de l'ébauche de corps de base, sont mises en prise avec les parties concaves de mise en prise (6A) du corps de raccordement formé à partir de l'ébauche de corps de raccordement ;
une étape de pression de surface brute pour comprimer la surface des parties (D) destinées à être les parties de colonne pour former les surfaces de contact par rapport au rouleau par une quantité de pression de surface inférieure à une quantité de pression de surface finale, l'étape de pression de surface brute étant réalisée après l'étape de coupe d'ébauche de corps de base ou l'étape de pliage, ou une étape de formation de surface inclinée découpée au laser pour former, par découpe au laser, des surfaces inclinées équivalentes aux surfaces inclinées formées à l'étape de pression de surface brute, l'étape de formation de surface inclinée découpée au laser étant réalisée au cours de l'étape de coupe d'ébauche de corps de base ou après l'étape de coupe d'ébauche de corps de base ;
une étape de pression de surface finie pour comprimer la surface des parties de colonne (5) afin de former des surfaces de contact par rapport au rouleau par la quantité de pression de surface finale, l'étape de pression de surface finie étant réalisée après l'étape d'assemblage et de fixation ; et
une étape de retrait de diamètre interne pour retirer une partie épaisse en excès d'une partie de diamètre interne de l'élément en forme de disque (B1) avec le trou central dans le corps de base pour satisfaire un diamètre interne souhaité.

4. Procédé de fabrication d'une cage de roulement à rouleaux ayant un diamètre de 1 à 3 m, la cage étant configurée de sorte qu'une paire de parties annulaires (4, 6) axialement séparées, est raccordée par une pluralité de parties de colonne (5) coulissant sur une surface périphérique externe d'un rouleau en tant qu'élément roulant, et une pluralité de trous de poche (P) est régulièrement formée dans une direction circonférentielle pour stocker et maintenir le rouleau au niveau d'une partie de paroi périphérique, dans lequel le procédé de fabrication comprend :
une étape de coupe d'ébauche de corps de base pour couper une plaque en acier ayant une épaisseur de 8 à 16 mm afin de faire faire saillie à des parties (D) destinées à être les parties de colonne, vers l'intérieur dans une direction radiale à partir d'une partie périphérique interne (C2) d'un élément de forme annulaire (B2) et former des parties convexes de mise en prise (5A) au niveau des extrémités d'attaque des parties destinées à être les parties de colonne, pour obtenir ainsi une ébauche de corps de base;
une étape de pliage pour plier les parties (D) destinées à être les parties de colonne dans l'ébauche de corps de base, le long de la partie périphérique interne de l'élément de forme annulaire ;
une étape de coupe d'ébauche de corps de raccordement pour couper une plaque en acier ayant une épaisseur de 8 à 16 mm afin de former des parties concaves de mise en prise (4A) régulièrement dans la direction circonférentielle dans une partie annulaire pour la mise en prise avec les parties convexes de mise en prise, pour obtenir ainsi une ébauche de corps de raccordement ;
une étape d'assemblage et de fixation pour assembler et fixer le corps de base (2) et le corps de raccordement (3), alors que les parties convexes de mise en prise du corps de base formé à partir de l'ébauche de corps de base (2A) sont mises en prise avec les parties concaves de mise en prise du corps de raccordement formé à partir de l'ébauche de corps de raccordement (3A) ; et
une étape de pression de surface pour comprimer la surface des parties (D) destinées à être les parties de colonne pour former et finir des surfaces de contact par rapport au rouleau en tant que surfaces inclinées (7) prédéterminées,
l'étape de pression de surface étant réalisée après l'étape de coupe d'ébauche de corps de base ou l'étape de pliage.

5. Procédé de fabrication d'une cage de roulement à rouleaux ayant un diamètre de 1 à 3 m, la cage étant configurée de sorte qu'une paire de parties annulaires (4, 6) axialement séparées, est raccordée par une pluralité de parties de colonne (5) coulissant sur une surface périphérique externe d'un rouleau en tant qu'élément roulant, et une pluralité de trous de poche (P) est régulièrement formée dans une direction circonférentielle pour stocker et maintenir le rouleau au niveau d'une partie de paroi périphérique, dans lequel le procédé de fabrication comprend :
une étape de coupe d'ébauche de constitution de corps de base pour couper une plaque en acier ayant une épaisseur de 8 à 16 mm afin de faire faire saillie aux parties (D) destinées à être les parties de colonne, vers l'intérieur dans une direction radiale à partir d'une partie périphérique interne (C2) d'une pluralité de plaques divisées en forme d'arc (E2) obtenues en divisant un élément de forme annulaire régulièrement dans la direction circonférentielle, et former des parties convexes de mise en prise (5A) au niveau des extrémités d'attaques des parties (D) destinées à être les parties de colonne, pour obtenir ainsi une pluralité d'ébauches de constitution de corps de base (F2) constituant un corps de base ;
une étape de pliage pour plier les parties (D) destinées à être les parties de colonne dans les ébauches de constitution de corps de base le long de la partie périphérique interne (C2) des plaques divisées en forme d'arc ;
une étape d'assemblage d'ébauche de constitution de corps de base pour assembler les plaques divisées en forme d'arc (E2) dans la pluralité d'ébauches de constitution de corps de base (F2) avec les parties pliées (D) destinées à être les parties de colonne, dans la forme de l'élément de forme annulaire (B2), pour obtenir ainsi un corps de joint d'ébauche de constitution de corps de base (H2) intégré ;
une étape de coupe d'ébauche de constitution de corps de raccordement pour couper une plaque en acier ayant une épaisseur de 8 à 16 mm afin de diviser une partie annulaire régulièrement dans la direction circonférentielle, pour obtenir ainsi une pluralité d'ébauches de constitution de corps de raccordement (G) constituant un corps de raccordement ;
une étape d'assemblage d'ébauche de constitution de corps de raccordement pour assembler la pluralité d'ébauches de constitution de corps de raccordement (G) dans la forme annulaire, pour obtenir ainsi un corps de joint d'ébauche de constitution de corps de raccordement (I) intégré ;
une étape de formation de parties concaves de mise en prise pour former des parties concaves de mise en prise (4A) régulièrement dans la direction circonférentielle dans le corps de joint d'ébauche de constitution de corps de raccordement pour la mise en prise avec les parties convexes de mise en prise ;
une étape d'assemblage et de fixation pour assembler et fixer le corps de base (2) et le corps de raccordement (3) alors que les parties convexes de mise en prise (5A) du corps de base formé à partir du corps de joint d'ébauche de constitution de corps de base (H2) sont mises en prise avec les parties concaves de mise en prise (4A) du corps de raccordement formé à partir du corps de joint d'ébauche de constitution de corps de raccordement ; et
une étape de pression de surface pour comprimer la surface des parties (D) destinées à être les parties de colonne (5) pour former et finir des surfaces de contact par rapport au rouleau en tant que surfaces inclinées (7) prédéterminées,
l'étape de pression de surface étant réalisée après l'étape de coupe d'ébauche de constitution de corps de base ou l'étape de pliage.

6. Procédé de fabrication d'une cage de roulement à rouleaux ayant un diamètre de 1 à 3 m, la cage étant configurée de sorte qu'une paire de parties annulaires (4, 6) axialement séparées, est raccordée par une pluralité de parties de colonne (5) coulissant sur une surface périphérique externe d'un rouleau en tant qu'élément roulant, et une pluralité de trous de poche (P) est régulièrement formée dans une direction circonférentielle pour stocker et maintenir le rouleau au niveau d'une partie de paroi périphérique, dans lequel le procédé de fabrication comprend :
une étape de coupe d'ébauche de corps de base pour couper une plaque en acier ayant une épaisseur de 8 à 16 mm afin de faire faire saillie à des parties (D) destinées à être les parties de colonne, vers l'intérieur dans une direction radiale à partir d'une partie périphérique interne (C2) d'un élément de forme annulaire (B2) et former des parties convexes de mise en prise (5A) au niveau des extrémités d'attaque des parties destinées à être les parties de colonne, pour obtenir ainsi une ébauche de corps de base;
une étape de pliage pour plier les parties (D) destinées à être les parties de colonne dans l'ébauche de corps de base (2A) le long de la partie périphérique interne de l'élément de forme annulaire ;
une étape de coupe d'ébauche de corps de raccordement pour couper une plaque en acier ayant une épaisseur de 8 à 16 mm afin de former des parties concaves de mise en prise (4A) régulièrement dans la direction circonférentielle dans une partie annulaire pour la mise en prise avec les parties convexes de mise en prise, pour obtenir ainsi une ébauche de corps de raccordement ;
une étape d'assemblage et de fixation pour assembler et fixer le corps de base (2) et le corps de raccordement (3) alors que les parties convexes de mise en prise (5A) du corps de base (2) formé à partir de l'ébauche de corps de base, sont mises en prise avec les parties concaves de mise en prise (4A) du corps de raccordement (3) formé à partir de l'ébauche de corps de raccordement ;
une étape de pression de surface brute pour comprimer les surfaces des parties (D) destinées à être les parties de colonne pour former des surfaces de contact par rapport au rouleau par une quantité de pression de surface inférieure à une quantité de pression de surface finale, l'étape de pression de surface brute étant réalisée après l'étape de coupe d'ébauche de corps de base ou l'étape de pliage ou une étape de formation de surface inclinée découpée au laser pour former, par découpe au laser, des surfaces inclinées équivalentes aux surfaces inclinées formées à l'étape de pression de surface brute, l'étape de formation de surface inclinée découpée au laser étant réalisée au cours de l'étape de coupe d'ébauche de corps de base ou après l'étape de coupe d'ébauche de corps de base ; et
une étape de pression de surface finie pour comprimer la surface des parties de colonne (5) afin de former les surfaces de contact par rapport au rouleau par la quantité de pression de surface finale, l'étape de pression de surface finie étant réalisée après l'étape d'assemblage et de fixation.

7. Procédé de fabrication d'une cage de roulement à rouleaux selon l'une quelconque des revendications 1 à 6, dans lequel :
le rouleau est un rouleau conique (RA) ou rouleau sphérique, et
le procédé de fabrication comprend une étape de formage pour former l'ébauche de corps de raccordement (3A) ou le corps de joint d'ébauche de constitution de corps de raccordement (I) selon une forme de ressort de disque afin d'être orthogonale aux parties de colonne (7) du corps de base.
